# EUROPÄISCHE PATENTSCHRIFT

(11) **EP 3 523 264 B1**
(45) Veröffentlichungstag und Bekanntmachung des Hinweises auf die Patenterteilung: **16.08.2023**
(21) Anmeldenummer: 18769685.1
(22) Anmeldetag: 13.09.2018
(51) Int. Cl.: C04B 35/03, C04B 35/043, C04B 35/626, C04B 35/66, C04B 38/00, C04B 35/63

(54) **VERFAHREN ZUR HERSTELLUNG EINER PORÖSEN SINTERMAGNESIA, VERSATZ ZUR HERSTELLUNG EINES GROBKERAMISCHEN FEUERFESTEN ERZEUGNISSES MIT EINER KÖRNUNG AUS DER SINTERMAGNESIA, DERARTIGES ERZEUGNIS SOWIE VERFAHREN ZU SEINER HERSTELLUNG, ZUSTELLUNG EINES INDUSTRIEOFENS UND INDUSTRIEOFEN**
METHOD FOR PRODUCING A POROUS SINTERED MAGNESIA, BACKFILL FOR PRODUCING A HEAVY-CLAY REFRACTORY PRODUCT WITH A GRANULATION FROM THE SINTERED MAGNESIA, PRODUCT OF THIS TYPE, AND METHOD FOR THE PRODUCTION THEREOF, LINING OF AN INDUSTRIAL FURNACE AND INDUSTRIAL FURNACE
PROCÉDÉ POUR LA FABRICATION D'UNE MAGNÉSIE FRITTÉE POREUSE, MÉLANGE POUR LA FABRICATION D'UN PRODUIT RÉFRACTAIRE EN CÉRAMIQUE GROSSIÈRE AYANT UNE GRANULOMÉTRIE À PARTIR DE LA MAGNÉSIE FRITTÉE, UN TEL PRODUIT AINSI QUE PROCÉDÉ POUR SA FABRICATION, DISPOSITION D'UN FOUR INDUSTRIEL ET FOUR INDUSTRIEL

(30) Priorität: 15.09.2017 DE 102017121452
(43) Veröffentlichungstag der Anmeldung: 14.08.2019
(73) Patentinhaber: Refratechnik Holding GmbH, 80807 München (DE)
(72) Erfinder: KLISCHAT, Hans-Jürgen, 37083 Göttingen (DE); PLUMMER, Robert, Zibo Shandong 2-1-801 (CN); VELLMER, Carsten, 37073 Göttingen (DE); WIRSING, Holger, 37091 Göttingen (DE)
(74) Vertreter: Dr. Solf & Zapf Patent- und Rechtsanwalts PartG mbB
(86) Internationale Anmeldenummer: PCT/EP2018/074817
(87) Internationale Veröffentlichungsnummer: WO 2019/053167

(56) Entgegenhaltungen:
- EP-A1- 0 081 794
- EP-A1- 2 674 407
- EP-A1- 2 813 481
- EP-A1- 2 883 853
- WO-A1-00/32536
- WO-A1-2004/065323
- CN-A- 106 747 594
- DE-A1-102008 019 529
- DE-A1-102013 010 854
- DE-U1-202007 018 373
- DE-U1-202013 012 201
- GB-A- 1 408 833
- US-A- 4 927 611
- US-A1- 2010 294 657

## Beschreibung

Die Erfindung betrifft ein Verfahren zur Herstellung einer porösen Sintermagnesia und einen Versatz zur Herstellung eines grobkeramischen, feuerfesten, geformten oder ungeformten, die poröse Sintermagnesia enthaltenden Erzeugnisses. Die Erfindung betrifft außerdem ein derartiges, aus dem Versatz hergestelltes Erzeugnis sowie ein Verfahren zu dessen Herstellung. Des Weiteren betrifft die Erfindung eine Zustellung, insbesondere ein Arbeitsfutter und/oder eine Hintermauerung, eines großvolumigen Industrieofens, wobei die Zustellung, insbesondere das Arbeitsfutter und/oder die Hintermauerung, mindestens ein derartiges Erzeugnis aufweist, sowie einen derartigen Industrieofen.

Der Begriff "feuerfest" soll im Rahmen der Erfindung nicht begrenzt sein auf die Definition gemäß ISO 836 bzw. DIN 51060, die einen Kegelfallpunkt von > 1500° C definieren. Feuerfeste Erzeugnisse im Sinne der Erfindung haben einen Druckerweichungspunkt T₀,₅ gemäß DIN EN ISO 1893: 2009-09 von T₀,₅ ≥ 600 °C, bevorzugt T₀,₅ ≥ 800 °C. Demnach sind feuerfeste bzw. refraktäre körnige Werkstoffe bzw. Körnungen im Sinne der Erfindung solche Werkstoffe bzw. Körnungen, die für ein feuerfestes Erzeugnis mit dem oben genannten Druckerweichungspunkt T_{0,5} geeignet sind. Die erfindungsgemäßen feuerfesten Erzeugnisse werden zum Schutz von Aggregatkonstruktionen in Aggregaten eingesetzt, in denen Temperaturen zwischen 600 und 2000 °C, insbesondere zwischen 1000 und 1800° C vorherrschen.

Dabei umfasst der Begriff "Körnung" bzw. "körniger Werkstoff" im Sinne der Erfindung einen schüttbaren Feststoff, der aus vielen kleinen, festen Körnern besteht. Weisen die Körner eine Korngröße ≤ 200 µm auf, handelt es sich bei der Körnung um ein Mehl bzw. Pulver. Die Körner sind durch mechanisches Zerkleinern, z.B. Brechen und/oder Mahlen hergestellt. Die Kornverteilung der Körnung wird in der Regel durch Siebung eingestellt.

Von den feuerfesten Werkstoffen ist dem Fachmann bekannt, dass sie auf sechs feuerfesten Grundoxiden sowie Kohlenstoff und feuerfesten Kohlenstoffverbindungen basieren, die z.B. in "Gerald Routschka/Hartmut Wuthnow, Praxishandbuch "Feuerfeste Werkstoffe", 5. Auflage, Vulkan-Verlag, (im Folgenden lediglich mit "Praxishandbuch" bezeichnet), S. 1-7", benannt und klassifiziert sind. Gemäß DIN EN ISO 10081 :2005-05 wird basierend auf dem chemischen Reaktionsverhalten zwischen nicht basischen und basischen feuerfesten Erzeugnissen unterschieden. Die Erzeugnisgruppe der nicht basischen Erzeugnisse umfasst die Werkstoffe der SiO₂-AlO₃-Reihe und andere, nach ihrem chemischen Reaktionsverhalten nicht näher eingruppierbare Werkstoffe wie SiC- und Kohlenstoff-Produkte. Die hoch SiO₂-haltigen Werkstoffe werden als sauer bezeichnet. Wesentliches Merkmal der meisten basischen Erzeugnisse ist es, dass die Summe der Oxide MgO und CaO überwiegt. Außerdem werden Chromit-, Picrochromit-, Spinell- und Forsteritsteine zu den basischen Erzeugnissen gerechnet, obwohl sie nahezu neutral sind. Zu den geformten basischen Erzeugnissen zählen insbesondere Magnesia enthaltende Erzeugnisse, insbesondere Magnesiaerzeugnisse, Magnesiachromiterzeugnisse, Magnesiaspinellerzeugnisse, Magnesiazirkoniaerzeugnisse, Magnesiapleonasterzeugnisse, Magnesiagalaxiterzeugnisse, Magnesiahercyniterzeugnisse, Magnesiadolomaerzeugnisse (siehe z.B. Praxishandbuch, S. 99, Tabelle 4.26). Basische ungeformte Erzeugnisse sind Erzeugnisse, deren Zuschlagstoffe im Wesentlichen aus Magnesia, Dolomit, Chrommagnesia, Chromerz und Spinell bestehen (siehe z.B. Praxishandbuch, S. 146).

Typische Magnesiarohstoffe zur Herstellung von Magnesiaerzeugnissen sind Körnungen bzw. Granulate aus Sinter- und/oder Schmelzmagnesia. Sintermagnesia wird durch Brennen bei einer Temperatur von > 1700 °C, bevorzugt > 1800 °C, hergestellt, um eine möglichst hohe Kornrohdichte zu erreichen. Schmelzmagnesia wird bei einer Temperatur > 2800 °C hergestellt, um ebenfalls eine möglichst hohe Kornrohdichte und eine möglichst niedrige Kornporosität zu erreichen. Übliche Sintermagnesiasorten weisen eine Kornrohdichte von > 3,10 g/cm³ auf. Angestrebt werden Werte von > 3,30 - 3,40 g/cm³. Die entsprechenden Kornporositäten (Gesamtporosität) liegen üblicherweise bei 4-10 Vol.-%. Körnungen aus Schmelzmagnesia weisen in der Regel eine Kornrohdichte von > 3,50 g/cm³ auf, mit einer Kornporosität (Gesamtporosität) < 2,5 Vol.-%.

Erfindungsgemäße geformte Erzeugnisse sind keramisch gebrannte oder ungebrannte, insbesondere gepresste, vorzugsweise in einer keramischen Fabrik hergestellte, Produkte, insbesondere Steine oder Platten. Die geformten Erzeugnisse, insbesondere die Steine, werden zur Ausbildung der Ofenauskleidung oder der Ofenhintermauerung, vorzugsweise mit Mörtel, vermauert oder mörtelfrei ("knirsch") vermauert. Bei den erfindungsgemäßen ungeformten Erzeugnissen handelt es sich um Erzeugnisse, die, meist beim Anwender, aus einer ungeformten Masse, z.B. durch Gießen oder Spritzen, hergestellt werden. Ungeformte Erzeugnisse werden am Verwendungsort meist hinter Schalungen in größeren Feldern eingebracht und bilden nach der Erhärtung die Ofenauskleidung oder die Ofenhintermauerung.

Die erfindungsgemäßen Erzeugnisse werden vorzugsweise in industriellen Brenn- oder Schmelz- oder in anderen befeuerten industriellen Aggregaten, z.B. in einem großvolumigen Industrieofen zur Bildung einer feuerfesten, feuerseitigen bzw. aggregatinnenseitigen Auskleidung (Arbeitsfutter) derselben verwendet. Vorzugsweise werden sie als Arbeitsfutter in Brennöfen der Nichtmetallindustrie, bevorzugt in Zementofenanlagen, Kalkschacht- oder Kalkdrehrohrofen, oder Wärmeöfen oder Öfen zur Energieerzeugung oder in Öfen der Stahlerzeugung oder der Nichteisenmetallindustrie verwendet. Die erfindungsgemäßen Erzeugnisse können zudem auch als isolierende Hintermauerung in einem der genannten Öfen verwendet werden. Gattungsgemäße feuerfeste Erzeugnisse sollen deshalb eine geringe Wärmeleitfähigkeit und eine hohe Infiltrationsbeständigkeit aufweisen. Des Weiteren sollen sie eine gute Temperaturbeständigkeit bei Anwendungstemperaturen, chemische Beständigkeit, Thermoschockbeständigkeit, gute Gefügeelastizität, angepasstes Druckerweichen und niedrige Gasdurchlässigkeit und hohe Heißbiegefestigkeit gewährleisten. Außerdem sollen die geformten Erzeugnisse eine dem Anwendungszweck angepasste Kaltdruckfestigkeit aufweisen, die insbesondere auch für deren Handhabbarkeit bei und nach ihrer Herstellung und auch noch nach Temperaturwechseln ausreichend hoch sein soll.

Gattungsgemäße feuerfeste Erzeugnisse sind aus der DE 10 2006 040 269 A1 und der DE 10 2013 020 732 A1 bekannt. Bei diesen wird eine gewünschte Porosität über die Korngrößenverteilung eingestellt:
Aus der DE 10 2006 040 269 A1 sind gebrannte grobkeramische, feuerfeste Produkte aus unterschiedlichen feuerfesten Werkstoffen bekannt, die möglicherweise als Arbeitsfutter verwendbar sind und aufgrund einer offenen Porosität > 10 Vol.-% gegebenenfalls wohl auch eine relativ geringe Wärmeleitfähigkeit aufweisen. Dabei handelt es sich um feinkörnige Produkte, die hergestellt sind aus einem Versetz, der 50-90 Gew.-% feinteiliges refraktäres Material mit einer Korngröße d₉₀<100 µm aufweist, wobei der Anteil der Korngröße d₉₀ zwischen 100-500 µm auf ≤ 10 Gew..-% begrenzt ist. Daraus ergibt sich ein grobkörniger Anteil von 10-50 Gew.-% mit d₉₀ > 500 µm, wobei die spezifische Kornauswahl des Versatzes entscheidend für das Gefüge des gebrannten Produktes und dessen Eigenschaften ist. Die offene Porosität der Produkte besteht zu mehr als der Hälfte aus Poren mit einem Durchmesser d₉₀ < 15 µm und zu mehr als 1/10 aus Poren mit einem Durchmesser d₉₀> 100 µm. Dabei beträgt der Porenanteil zwischen 15 und 100 µm maximal 1/7 der offenen Gesamtporosität.

Aus der DE 10 2013 020 732 A1 geht ein grobkeramisches, feuerfestes Erzeugnis aus mindestens einem körnigen feuerfesten Werkstoff hervor, das eine offene Porosität zwischen 22 und 45 Vol.-%, insbesondere zwischen 23 und 29 Vol.-%, und einen Kornaufbau aufweist, bei dem der Mittelkornanteil mit Korngrößen zwischen 0,1 und 0,5 mm 10 bis 55 Gew.-%, insbesondere 35 bis 50 Gew.-% beträgt, wobei der Rest des Kornaufbaus Mehlkornanteil mit Korngrö-βen bis 0,1 mm und/oder Grobkornanteil mit Korngrößen über 0,5 mm ist. Das feuerfeste Erzeugnis wird insbesondere zur Herstellung eines Arbeitsfutters eines großvolumigen Industrieofens verwendet.

Die US-PS 4,927,611 beschreibt einen Magnesiaklinker mit einer Porosität von > 40 Vol.-%, vorzugsweise im Bereich 50 bis 70 Vol.-%, und einer Kornrohdichte von < 2,0 g/cm³. Zudem weisen mehr als 90 Vol.-% der Poren eine Porengröße < 50 µm auf. Die Herstellung des Magnesiaklinkers erfolgt durch Granulation einer magnesiumoxidbildenden Komponente mit einer Korngröße von < 150 µm (100 mesh) und einem ausbrennbaren Stoff in einer Zusatzmenge von 10-40 Gew.-% sowie dem Zusatz von 1-15 % eines Magnesiumsalzes und anschließendes Brennen bei 1300 bis 1600 °C. Der so hergestellte Magnesiaklinker wird in spritzbaren Suspensionen zur Beschichtung von Düsen und Verteilerrinnen eingesetzt.

Die Verwendung von leichtgewichtigen basischen Körnungen auf Basis von Magnesia-Spinell wird außerdem von Wen Yan et al. in "Effect of Spinel Content of lightweight aggregates on the reaction characteristics of periclase-spinel refractories with cement clinker" in Proc. 128, UNITECR 2015, sowie von Wen Yan et al. in "Effect of Spinel Content on the Reaction of Porous Periclase-Spinel Ceramics and Cement Clinker" aus Key Engineering Materials, Vol. 697, pp 581-585, dargestellt. Danach werden Körnungen aus MgO und aus MgO-Spinell-Mischungen erzeugt, also MgO bzw. MgO-Spinell-Co-Klinker, mit einer Porosität von 24,8 - 30,0 Vol.-%, und anschließend mit Magnesia als Matrix vermischt, geformt und bei einer Temperatur von 1550 °C gebrannt. Diese geformten Erzeugnisse sind gekennzeichnet durch eine Porosität von ca. 30 Vol.-%. MgO-Körner weisen in ihrer Porengrößenverteilung ein Maximum bei einem Porendurchmesser von 50 µm auf; der durchschnittliche Porendurchmesser der MgO-Spinell-Co-Klinker-Körner wird mit Werten zwischen 11,33 µm und 27,58 µm angegeben, der durchschnittliche Porendurchmesser der Matrix liegt bei 50,52 µm. Generell steigt mit steigendem Spinellgehalt die Anfälligkeit gegen Zementklinkerangriff. Den höchsten Widerstand zeigen ein reines Magnesiaerzeugnis und ein Erzeugnis mit einem Co-Klinker aus 75 % Magnesia und 25 % Spinell. Weitere technologisch wichtige Größen, etwa Festigkeit, Feuerfestigkeit, Elastizität (Elastizitätsmodul, Schubmodul), Temperaturwechselbeständigkeit, Volumenbeständigkeit etc. werden nicht genannt. Es ist daher zu vermuten, dass derartige Steine in einem Zementdrehofen aufgrund mangelnder technologischer Eigenschaften nicht eingesetzt werden können. Bemerkenswert ist der große Porendurchmesser, der auf die Verwendung von Ausbrennstoffen für die Porenbildung schließen lässt (organische Verbindungen, Hydroxide, Carbonate), und wie sie auch vom gleichen Autor beschrieben werden (Wen Yan et al., Preparation and characterization of porous MgO-Al2O3 refractory aggregates using an in-situ decomposition pore-forming technique, Ceram. Int. 2015 Jan., pp. 515-520).

Die CN 106747594 A offenbart die Herstellung von Körnungen aus einer Mischung aus 5-95 Gew.-% MgO-Kaustermehl und 5-95 Gew.-% Magnesitmehl. Diese Mischungen werden mit Liginsulfonat vermischt und zu Presslingen gepresst. Die Presslinge werden für 20 bis 50 Stunden getrocknet und anschließend bei 1450-1700°C im Tunnelofen oder Herdwagenofen für 10-20 Stunden gebrannt. Beispielhaft mit 95 Gew.-% MgO-Kaustermehl und 5 Gew.-% Magnesitmehl hergestellte Körnungen weisen eine Porosität von 16,5 Vol.-% und eine Dichte von 2,97 g/cm³ auf.

Die EP 0 081 794 A1 offenbart ein Verfahren zur Herstellung von gebrannten, feuerfesten, porösen, grobkeramischen Gasspülsteinen. Dazu wird eine Mischung, welche Sintermagnesia, einen beim Brand gasabgebenden Stoff, z.B. Rohmagnesit, sowie ein temporäres Bindemittel enthält, hergestellt. Die Mischung wird gepresst und bei über 1700°C, vorzugsweis über 1800°C, gebrannt. Die Mischung ist zudem weitgehend frei von Feinstanteilen unter 0,5 mm. Die Gasspülsteine weisen eine offene Porosität von mindestens 20 Vol.-% auf.

Aufgabe der Erfindung ist es, eine Sintermagnesia mit guter Kornfestigkeit für einen Versatz zur Herstellung feuerfester Erzeugnisse mit hoher Porosität und niedriger Wärmeleitfähigkeit bereit zu stellen, die für den Einsatz in großvolumigen Industrieöfen geeignete Eigenschaften und insbesondere eine geringe Infiltrationsneigung gegen Alkaliinfiltration aufweisen.

Weitere Aufgabe der Erfindung ist die Bereitstellung eines derartigen Versatzes sowie eines aus dem Versatz hergestellten geformten oder ungeformten feuerfesten Erzeugnisses, sowie eines Verfahrens zu dessen Herstellung.

Zudem ist Aufgabe der Erfindung die Bereitstellung einer feuerfesten Zustellung eines großvolumigen Industrieofens, insbesondere eines Brennofens der Nichtmetallindustrie, bevorzugt einer Zementofenanlage, eines Kalkschacht- oder Kalkdrehrohrofens, eines Ofens zur Herstellung von Magnesia oder Doloma oder eines Wärmeofens oder eines Ofens zur Energieerzeugung, oder auch eines Ofens der Nichteisen- oder Stahlindustrie, mit mindestens einem bzw. ausgebildet aus mindestens einem erfindungsgemäßen Erzeugnis.

Die Zustellung kann z. B. mehrschichtig aufgebaut sein und ein feuerseitiges bzw. heißseitiges Arbeitsfutter bzw. eine aggregatinnenseitige Auskleidung und ein dahinter angeordnete isolierende Hintermauerung aufweisen.

Diese Aufgaben werden durch die Merkmale der Ansprüche 1, 11, 19, 24, 26, 28 und 31 gelöst. Vorteilhafte Ausführungsformen der Erfindung werden in den von diesen Ansprüchen abhängigen Ansprüchen gekennzeichnet.

Im Folgenden wird die Erfindung anhand einer Zeichnung beispielhaft näher erläutert:

### Es zeigen:

- Figur 1:: Beispielhaft eine Porendurchmesserverteilung einer erfindungsgemäßen Körnung aus poröser Sintermagnesia
- Figur 2:: Beispielhaft eine Porendurchmesserverteilung eines erfindungsgemäßen Formsteins
- Figur 3:: Eine lichtmikroskopische Aufnahme (Auflicht) einer erfindungsgemäßen Sintermagensia, gesintert in einem HT-Ofen bei 1530°C, Brenndauer 6 h

Im Rahmen der Erfindung wurde überraschenderweise herausgefunden, dass durch Sintern von Presslingen, insbesondere Pellets, aus MgO-Mehl mit einer Korngröße ≤ 200 µm, vorzugsweise aus MgO-Kaustermehl, bei einer reduzierten maximalen Brenntemperatur (anstelle von den üblichen Temperaturen von > 1700 °C) und anschließendes mechanisches Zerkleinern der Presslinge eine Sintermagnesia hergestellt werden kann, welche eine Kornporosität (Gesamtporosität) gemäß DIN EN 993-1:1995-04 und DIN EN 993-18:2002-11 von 15 bis 38 Vol.-%, vorzugsweise von 20 bis 38 Vol.-% aufweist.

Das MgO-Mehl kann z.B. auch aus totgebrannter Magnesia (DBM) oder Schmelzmagnesia bestehen. Vorzugsweise handelt es sich aber um MgO-Kaustermehl.

Und unter Verwendung dieser körnigen, porösen Sintermagnesia, können feuerfeste Erzeugnisse mit typischen mechanischen und chemischen Eigenschaften hergestellt werden, die gegenüber den bisher eingesetzten Erzeugnissen eine höhere Porosität und damit niedrigere Wärmeleitfähigkeit, aber dennoch eine geringe Infiltrationsneigung aufweisen.

Insbesondere wurde im Rahmen der Erfindung herausgefunden, dass es ohne Zusatz von Ausbrennstoffen möglich ist, nur durch eine reduzierte maximale Brenntemperatur anstelle der üblichen Temperaturen > 1700 °C, aus den Presslingen aus MgO-Mehlkörnern, vorzugsweise MgO Kauster-Partikeln, eine Körnung aus Sintermagnesia herzustellen, die im Vergleich zu bekannter Sintermagnesia und Schmelzmagnesia eine deutlich geringere Kornrohdichte und deutlich höhere Porosität aufweist, welche wiederum zu den verbesserten Eigenschaften der daraus hergestellten Erzeugnisse führt.

Die Brenndauer und die Sintertemperaturen, also der Temperaturverlauf bzw. das Temperaturregime bzw. das Temperaturprofil, der Sinterung bzw. des Sintervorgangs, werden also erfindungsgemäß so eingestellt, dass die erfindungsgemäße Körnung aus poröser Sintermagnesia eine Kornporosität (Gesamtporosität) gemäß DIN 993-18:2002-11 und DIN 993-1:1995-4 von 15 bis 38 Vol.%, bevorzugt 20 bis 38 Vol.-%, und vorzugsweise eine Kornrohdichte gemäß DIN 993-18:2002-11 von 2,20 bis 2,85 g/cm³, bevorzugt 2.20 bis 2.75 g/cm³ aufweist. Das Temperaturregime hängt dabei beispielsweise von der Magnesiasorte (deren Reaktivität) und der Partikelgröße des MgO-Mehls ab.

Erfindungsgemäß erfolgt die Sinterung bei einer maximalen Temperatur zwischen 1100-1600 °C, vorzugsweise zwischen 1200-1600 °C, bevorzugt zwischen 1200-1550 °C, besonders bevorzugt zwischen 1200-1500 °C.

Vorzugsweise erfolgt die Sinterung bei einer maximalen Temperatur ≤ 1550 °C, bevorzugt ≤ 1500 °C, besonders bevorzugt ≤ 1400 °C.

Die Brenndauer bei der Maximaltemperatur zur Herstellung der erfindungsgemäßen Sintermagnesia liegt dabei erfindungsgemäß bei 0,5 h bis 7 h, bevorzugt 2 h bis 6 h. Die gesamte Brenndauer entspricht vorzugsweise derjenigen der üblichen Herstellung von Sintermagnesia.

Das Brennen erfolgt vorzugsweise in oxidierender Atmosphäre, kann aber auch in reduzierender Atmosphäre erfolgen. Nach dem Brennen wird die Sintermagnesia mechanisch zerkleinert, insbesondere gebrochen, und durch Sieben klassiert.

Der verwendete mehlförmige MgO-Kauster bzw. das MgO-Kaustermehl ist vorzugsweise in üblicher Weise hergestellt aus Magnesiumhydroxid oder aus Magnesiumcarbonat.

Zudem weist das verwendete MgO-Mehl, bevorzugt das MgO-Kaustermehl, vorzugsweise eine Partikelgrößenverteilung mit folgenden Werten auf:
d₉₀ zwischen 80 und 100 µm und/oder d₅₀ zwischen 5 und 15 µm und/oder d₁₀ zwischen 1 und 3 µm. Der dₓ-Wert bedeutet bekanntermaßen, dass x Gew.-% der Partikel kleiner sind als der angegebene Wert. Er wird bestimmt mittels Lasergranulometrie gemäß DIN ISO 13320:2009. Das MgO-Mehl wird dazu mittels Ultraschall in Ethanol dispergiert.

Zudem enthält das verwendete MgO-Mehl, bevorzugt der verwendete MgO-Kauster, vorzugsweise mindestens 88 Gew.-%, bevorzugt mindestens 95 Gew.-% MgO, besonders bevorzugt mindestens 97 Gew.-% MgO, bestimmt mittels Röntgenfluoreszenzanalyse (RFA) gemäß DIN 12677:2013-02. Des Weiteren enthält das verwendete MgO-Mehl, bevorzugt der verwendete MgO-Kauster, vorzugsweise maximal 4 Gew.-%, bevorzugt maximal 2 Gew.-% CaO, bestimmt mittels Röntgenfluoreszenzanalyse (RFA) gemäß DIN 12677:2013-02.

Das MgO-Mehl, vorzugsweise das MgO-Kaustermehl, wird zudem auf einer üblichen Presse, vorzugsweise einer Pellertierpresse oder Brikettierpresse oder einer hydraulischen Presse derart verpresst, dass die Presslinge eine Rohdichte gemäß DIN 66133:1993-06 von 1,8 bis 2,3 g/cm³, bevorzugt 1,9 bis 2,2 g/cm³, und/oder eine Porosität gemäß DIN 66133:1993-06 von 32 bis 52 Vol.-%, bevorzugt 35 bis 45 Vol.-%, aufweisen. Bei den Presslingen handelt es sich vorzugsweise um Pellets. Es kann sich aber vorteilhafterweise auch um Briketts oder Steine handeln.

Vorzugsweise wird dabei ausschließlich das MgO-Mehl, vorzugsweise das MgO-Kaustermehl, ggf. unter Zugabe von etwas Wasser, verpresst, also ohne Bindemittel und somit ohne jegliche Ausbrennstoffe.

Die Presslinge bestehen somit, bezogen auf Ihre Trockenmasse, vorzugsweise zu mindestens 96 Gew.-%, bevorzugt zu mindestens 98 Gew.-%, besonders bevorzugt zu 100 Gew.-%, aus MgO-Mehl, bevorzugt aus MgO-Kaustermehl.

Die Presslinge enthalten insbesondere kein Magnesitmehl.

Die Brenndauer und die Sintertemperaturen werden, wie bereits erläutert, so eingestellt, dass die erfindungsgemäße Körnung aus poröser Sintermagnesia eine Kornporosität (Gesamtporosität) gemäß DIN 993-18:2002-11 und DIN 993-1:1995-4 von 15 bis 38 Vol.-%, bevorzugt 20 bis 38 Vol.-%, und vorzugsweise eine Kornrohdichte gemäß DIN 993-18:2002-11 von 2,20 bis 2,85 g/cm³, bevorzugt 2.20 bis 2.75 g/cm³ aufweist. Dies gilt auch für die übrigen Eigenschaften der Körnung.

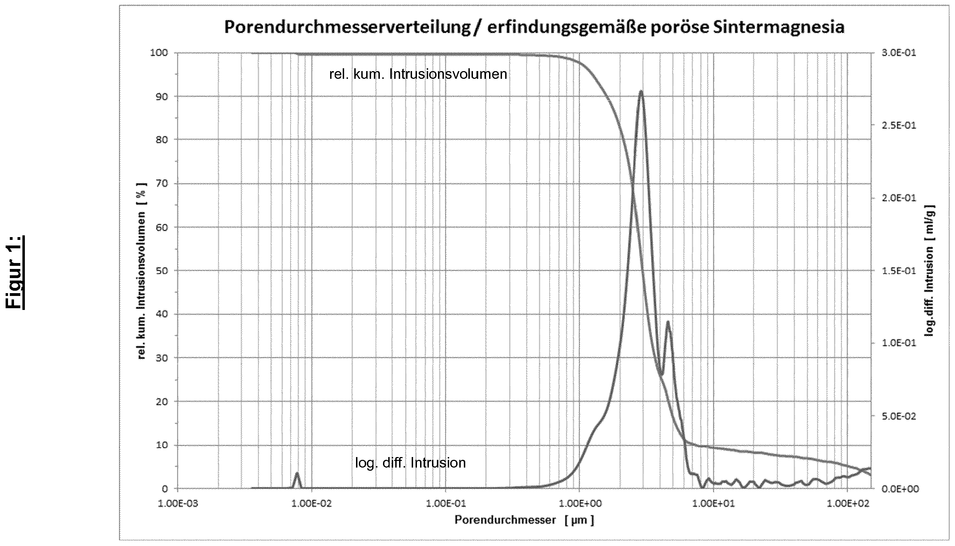

Insbesondere weist die erfindungsgemäße Körnung aus poröser Sintermagnesia vorzugsweise einen geringen mittleren Porendurchmesser d₅₀ von 0,1 bis 10 µm, bevorzugt von 2 bis 8 µm, bestimmt gemäß DIN 66133:1993-06 auf. Dabei kann die Porendurchmesserverteilung monomodal sein (siehe Figur 1).

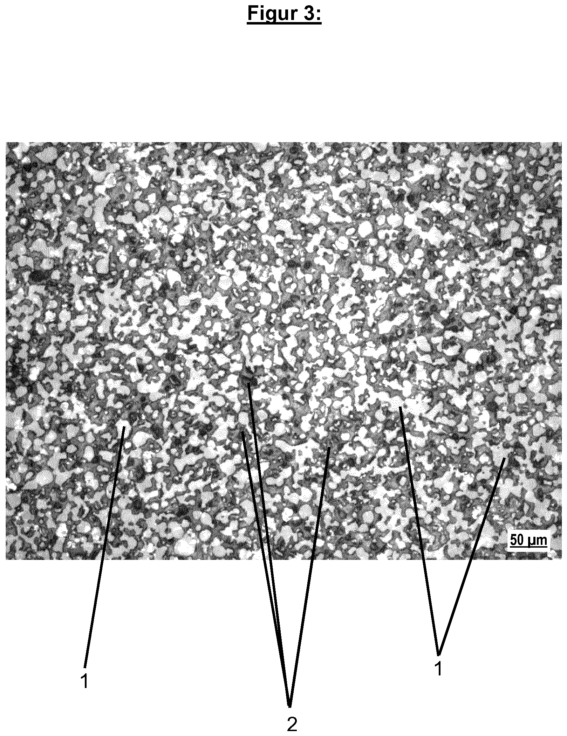

Das Gefüge der erfindungsgemäßen Sintermagnesia zeigt Figur 3. Es weist eine homogene Verteilung von Magnesiapartikeln 1 und kleinen Poren 2 auf. Größere Poren sind nicht zu erkennen. Die helleren Poren 2 sind mit Epoxidharz gefüllte Poren, die etwas dunkleren Poren 2 sind ungefüllt.

Die erfindungsgemäße Körnung aus poröser Sintermagnesia weist zudem vorzugsweise eine Korndruckfestigkeit in Anlehnung an DIN 13055:2016-11 (10 mm statt 20 mm) von 10 bis 30 MPa, bevorzugt von 11 bis 25 MPa, auf.

Die erfindungsgemäße Körnung aus poröser Sintermagnesia weist zudem vorzugsweise folgende Wärmeleitfähigkeiten (WLF) gemäß DIN EN 821-2:1997-08 auf:

**Tabelle 1: Bevorzugte Wärmeleitfähigkeiten der erfindungsgemäßen Sintermagnesia**

| **WLF** | | vorzugsweise |
|---|---|---|
| **400 °C [W/mK]** | 3 bis 9 | 4 bis 8 |
| **800 °C [W/mK]** | 2 bis 7 | 3 Bis 6 |
| **1200 °C [W/mK]** | 2 bis 7 | 3 bis 6 |

Die erfindungsgemäße Körnung zeichnet sich insbesondere durch folgende Eigenschaften aus:

**Tabelle 2: Eigenschaften erfindungsgemäßer, poröser und dichter Sintermagnesia**

| | **Erfindungsgemäße Sintermagnesia** | **Herkömmliche, dichte Sintermagnesia** |
|---|---|---|
| **Kornrohdichte [g/cm³]** | 2,20-2,85 | 3,15-3,46 |
| **Kornporosität [Vol.-%]** | 11-40 | 4-10 |
| **MgO [Gew.-%]** | 88->99 | 88->99 |
| **Al₂O₃ [Gew.-%]** | <1 | <1 |
| **Fe₂O₃ [Gew.-%]** | 0,1-8 | 0,1-8 |
| **CaO [Gew.-%]** | 0,3-8 | 0,3-8 |
| **SiO₂ [Gew.-%]** | 0,2-5 | 0,2-5 |

| **WLF** | | |
|---|---|---|
| **400 °C [W/mK]** | 5,84 (≤9) | 13,29 (>9) |
| **800 °C [W/mK]** | 3,71 (≤7) | 8,33 (>7) |
| **1200 °C [W/mK]** | 3,41 (≤7) | 7,22 (>7) |

Wie bereits erläutert, wird die erfindungsgemäße Sintermagnesia in erfindungsgemäßen Versätzen zur Herstellung von erfindungsgemäßen, geformten oder ungeformten feuerfesten Erzeugnissen verwendet.

Ein erfindungsgemäßer Versatz weist ein die erfindungsgemäße Sintermagnesia enthaltendes Trockenstoffgemisch und Bindemittel auf. Das heißt, die Menge an Bindemittel (trocken oder flüssig) wird additiv zugegeben und bezieht sich auf die gesamte Trockenmasse des Trockenstoffgemisches. Gegebenenfalls kann auch noch ein flüssiges Zusatzmittel enthalten sein, welches ebenfalls additiv zugegeben wird und sich auf die gesamte Trockenmasse des Trockenstoffgemisches bezieht. Vorzugsweise besteht der Versatz zu mindestens 90 Gew.-%, bevorzugt zu mindestens 99 Gew.-%, besonders bevorzugt zu 100 Gew.-%, aus Bindemittel und dem Trockenstoffgemisch, bezogen auf die Gesamtmasse des Versatzes.

Das Trockenstoffgemisch weist vorzugsweise folgende Bestandteile, jeweils bezogen auf die gesamte Trockenmasse des Trockenstoffgemisches, auf (die Mengenangaben geben jeweils die Gesamtsumme der jeweiligen Komponenten an, also z.B. den Gesamtanteil an grober Körnung aus erfindungsgemäßer Sintermagnesia, den Gesamtanteil an Mehlkörnung oder an weiterer Körnung):
a) zumindest eine grobe Körnung aus der erfindungsgemäßen Sintermagnesia mit einer Korngröße > 200 µm, vorzugsweise in einer Menge von 10 bis 90 Gew.-%, bevorzugt von 20 bis 80 Gew.-%
b) zumindest eine Mehlkörnung aus Magnesia, z.B. aus der erfindungsgemäßen Sintermagnesia, mit einer Korngröße ≤ 200 µm, vorzugsweise in einer Menge von 90 bis 10 Gew.-%, bevorzugt von 80 bis 20 Gew.-%
c) gegebenenfalls zumindest eine weitere Körnung aus einem feuerfesten Werkstoff, vorzugsweise in einer Gesamtmenge an weiterer Körnung von 0,5 bis 40 Gew.-%, bevorzugt von 3 bis 30 Gew.-%
d) gegebenenfalls zumindest einen Zusatzstoff für feuerfeste Werkstoffe, vorzugsweise in einer Gesamtmenge < 5 Gew.-%
e) gegebenenfalls zumindest ein Zusatzmittel für feuerfeste Werkstoffe, vorzugsweise in einer Gesamtmenge von < 5 Gew.-%

Die Komponenten können in dem Trockenstoffgemisch in jeglicher Kombination enthalten sein.

Der erfindungsgemäße Versatz enthält zudem, wie bereits erläutert, additiv zu dem Trockenstoffgemisch zumindest ein flüssiges oder festes Bindemittel für feuerfeste Werkstoffe, vorzugsweise in einer Gesamtmenge von 1 bis 9 Gew.%, bevorzugt von 2,5 bis 6 Gew.-%, bezogen auf die trockene Gesamtmasse des Trockenstoffgemisches.

Im Fall von ungeformten Erzeugnissen ist das flüssige Bindemittel vorzugsweise beigepackt in einem von den trockenen Bestandteilen des Versatzes getrennten Behältnis.

Des Weiteren weist die grobe Körnung aus der erfindungsgemäßen Sintermagnesia vorzugsweise eine Korngröße bis maximal 8 mm, bevorzugt bis maximal 6 mm, besonders bevorzugt bis maximal 4 mm, auf.

Die Kornverteilung der groben Körnung aus der erfindungsgemäßen Sintermagnesia und/oder des erfindungsgemäßen Trockenstoffgemisches ist vorzugsweise stetig, bevorzugt gemäß einer Litzow-, Furnas- oder Fullerkurve oder sie weist eine Gaußsche Verteilung auf.

Die weitere Körnung besteht vorzugsweise aus einem elastifizierenden Rohstoff, also einem Rohstoff, der typischerweise der Senkung des Elastizitätsmoduls dient.

Vorzugsweise besteht die weitere Körnung aus einem Rohstoff aus der folgenden Gruppe:
Magnesiumaluminat-Spinell, Bauxit, Tonerde, Hercynit, Pleonast, Chromerz, pleonastischem Spinell, Zirkonoxid, Olivin und/oder Forsterit.

Ganz besonders wirksam gelingt die Erfindung mit einem Trockenstoffgemisch aus folgenden Werkstoffen:
Magnesia
Magnesia mit Magnesiumaluminat-Spinell
Magnesia mit Hercynit
Magnesia mit Forsterit
Magnesia mit Pleonast bzw. pleonastischem Spinell
Magnesia mit Chromerz
Magnesia mit Zirkonoxid.

Wie erläutert, sind auch Kombinationen verschiedener weiterer Körnungen möglich, bevorzugt eine Kombination einer weiteren Körnung aus Hercynit mit einer weiteren Körnung aus Magnesiumaluminat-Spinell.

Des Weiteren weist die weitere Körnung vorzugsweise eine maximale Korngröße von ≤ 8 mm, bevorzugt von ≤ 6 mm, besonders bevorzugt von ≤ 4 mm, auf.

Bei dem trockenen Bindemittel handelt es sich um ein für feuerfeste Erzeugnisse geeignetes Bindemittel. Diese Bindemittel sind beispielsweise im Praxishandbuch, Seite 28/Punkt 3.2 angegeben.

Vorzugsweise handelt es sich bei dem flüssigen Bindemittel um ein Bindemittel aus der folgenden Gruppe: wärmehärtendes Kunstharzbindemittel, insbesondere Phenol-Formaldehydharz, oder Melasse oder Ligninsulfonat oder um ein schwefelfreies Bindemittel, insbesondere um ein Bindemittel auf Basis Dextrose, eine organische Säure, Saccharose, einen Al₂O₃-Binder, Phosphorsäure, einen Phosphatbinder, Wasserglas, Ethylsilicat, oder ein Sulfat, z. B. Magnesiumsulfat oder Aluminiumsulfat, oder ein Sol-Gel-System.

Bei dem trockenen Zusatzstoff handelt es sich um einen für feuerfeste Erzeugnisse geeigneten Zusatzstoff. Diese Zusatzstoffe sind beispielsweise im Praxishandbuch, Seite 28/Punkt 3.3 angegeben. Sie werden verwendet, um die Verarbeitbarkeit bzw. Verformbarkeit zu verbessern oder das Gefüge der Erzeugnisse zu modifizieren und damit besondere Eigenschaften zu erzielen.

Wie bereits erläutert, dient der erfindungsgemäße Versatz zur Herstellung erfindungsgemäßer feuerfester geformter oder ungeformter Erzeugnisse.

Für die Herstellung von geformten Erzeugnissen, insbesondere Steinen, wird eine Mischung bzw. bildsame Masse aus dem Trockenstoffgemisch des erfindungsgemäßen Versatzes mit zumindest einem flüssigen und/oder festen Bindemittel und/oder Wasser hergestellt. Wenn der Versatz ein flüssiges Bindemittel enthält, ist die Zugabe von Wasser nicht notwendig, aber möglich.

Zur optimalen Verteilung des oder der Bindemittel und/oder des Wassers wird z.B. 3 bis 10 Minuten lang gemischt.

Die Mischung wird in Formen gegeben und gepresst, so dass Formkörper gebildet werden. Die Pressdrücke liegen in üblichen Bereichen, z.B. bei 60-180 MPa, bevorzugt bei 100-150 MPa.

Vorzugsweise wird nach dem Pressen eine Trocknung durchgeführt, z.B. zwischen 60 und 200 °C, insbesondere zwischen 90 und 140 °C. Die Trocknung erfolgt vorzugsweise bis auf eine Restfeuchte zwischen 0,1 und 0,6 Gew.%, insbesondere zwischen 0,2 und 0,5 Gew.-%, bestimmt gemäß DIN 51078:2002-12.

Es hat sich somit im Rahmen der Erfindung herausgestellt, dass die Herstellung von Formkörpern mit üblichen Pressdrücken möglich ist, um die genannten Porositäten mit den entsprechenden mechanischen und thermischen Eigenschaften zu erzielen. Offenbar sorgt die Porosität der erfindungsgemäßen Sintermagnesia, die insbesondere in den üblichen Körnungen nach der Fuller- oder Litzowkornverteilung der Werkstoffmischungen eingesetzt wird, in der gesamten Kornaufbaumischung dafür, dass sich insbesondere beim Pressen das erfindungsgemäße Porenvolumen bilden kann, ohne dass die Körner ein Stützgerüst im Gefüge nach der DE 10 2013 020 732 A1 ausbilden müssen.

Die erfindungsgemäßen Formkörper, insbesondere die Steine, können ungebrannt oder getempert oder gebrannt verwendet werden. Vorzugsweise werden sie allerdings gebrannt verwendet.

Getempert werden die grünen gepressten Steine in einem keramischen Brennofen, z.B. einem Tunnelofen, zwischen 400 und 1000 °C, insbesondere zwischen 500 und 800 °C.

Zum Brennen werden die, vorzugsweise getrockneten, gepressten Steine in einem keramischen Brennofen, z.B. einem Tunnelofen, keramisch gebrannt, vorzugsweise zwischen 1200 und 1800 °C, insbesondere zwischen 1400 und 1700 °C. Vorzugsweise wird oxidierend gebrannt, abhängig von der Materialzusammensetzung kann aber auch ein reduzierender Brand vorteilhaft sein.

Die Wärmeleitfähigkeit nach dem Heißdraht-(parallel-)verfahren gemäß DIN 993-15:2005-14 der erfindungsgemäßen gebrannten, geformten Erzeugnisse, insbesondere der Steine liegt vorzugsweise bei 300 °C bei 4,0 bis 6,0 W/mK, bevorzugt bei 4,5 bis 5,8 W/mK, bei 700 °C bei 3,0 bis 5,0 W/mK, bevorzugt bei 3,0 bis 4,8 W/mK, und bei 1000 °C bei 2,0 bis 3,5 W/mK, bevorzugt bei 2,0 bis 3,2 W/mK.

Die gebrannten, geformten Erzeugnisse, insbesondere die Steine, weisen vorzugsweise eine hohe offene Porosität von 22 bis 45 Vol.-%, bevorzugt 23 bis 35 Vol.-%, bestimmt gemäß DIN EN 993-1 :1995-04 auf.

Des Weiteren weisen sie vorzugsweise einen Mittelwert d₅₀ der Porengrößenverteilung (Durchmesser), bestimmt gemäß DIN 66133:1993-06 von 0,5 bis 10 µm, bevorzugt von 2 bis 8 µm, auf.

Zudem weisen die gebrannten, geformten Erzeugnisse, insbesondere die Steine, vorzugsweise eine geringe Rohdichte von 1,9 bis 2,9 g/cm³, insbesondere von 2,0 bis 2,8 g/cm³, bestimmt gemäß DIN 993-1:1995-04 auf.

Die Kaltdruckfestigkeit gemäß DIN EN 993-5:1998-12 der erfindungsgemäßen gebrannten, geformten Erzeugnisse, insbesondere der Steine, liegt vorzugsweise bei 30 und 100 MPa, insbesondere bei 45 und 90 MPa. Die Kaltbiegefestigkeit nach DIN EN 993-6:1995-04 der erfindungsgemäßen gebrannten, geformten Erzeugnisse, insbesondere der Steine, liegt vorzugsweise bei 2 bis 18 MPa, insbesondere bei 3 bis 10 MPa.

Die Gasdurchlässigkeit nach DIN EN 993-4:1995-04 der erfindungsgemäßen gebrannten, geformten Erzeugnisse, insbesondere der Steine, liegt vorzugsweise bei 0,2 bis 8 nPm, insbesondere bei 0,5 bis 6 nPm.

Die Temperaturwechselbeständigkeit bestimmt nach DIN EN 993-11:2008-03 an Luft bei einer erhöhten Prüftemperatur von 1100 °C der erfindungsgemäßen gebrannten, geformten Erzeugnisse, insbesondere der Steine, liegt vorzugsweise bei > 20 Abschreckzyklen, insbesondere bei > 30 Abschreckzyklen.

Für die Herstellung von ungeformten Erzeugnissen, insbesondere Massen, bevorzugt Spritzmassen oder Vibrationsmassen oder Gießmassen oder Stochermassen, wird ebenfalls eine Mischung aus dem erfindungsgemäßen Trockenstoffgemisch mit zumindest einem trockenen und/oder flüssigen Bindemittel und/oder Wasser hergestellt. Wenn der Versatz ein flüssiges Bindemittel enthält, ist die Zugabe von Wasser nicht notwendig, aber möglich.

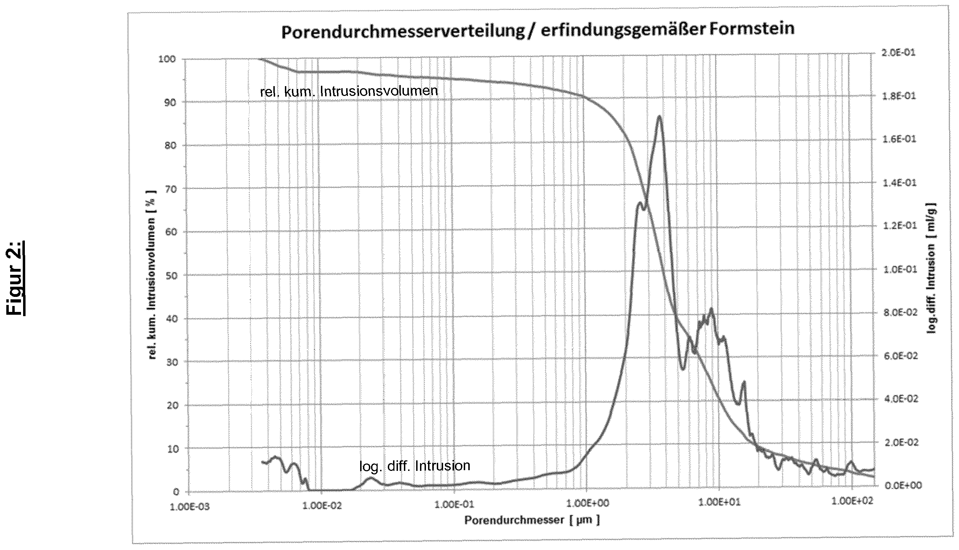

Zusammenfassend stellt die Erfindung hoch poröse, aber bezüglich Wärmeleitfähigkeit und Porengröße und damit der Gasdurchlässigkeit als Arbeitsfutter und auch als Hintermauerung hervorragend geeignete, feuerfeste Erzeugnisse zur Verfügung. Besonders vorteilhaft ist der geringe mittlere Porendurchmesser d₅₀ der erfindungsgemäßen Sintermagnesia, der bevorzugt bei 2-8 µm liegt und der auch im hergestellten Erzeugnis, neben dem mittleren Porendurchmesser d₅₀ der Matrix von ca. 4 µm, noch vorliegt (siehe Figur 2).

Die erfindungsgemäßen geformten, insbesondere gepressten, oder ungeformten grobkeramischen feuerfesten Erzeugnisse sind trotz hoher Porosität als Arbeitsfutter in einem befeuerten Industrieofenaggregat verwendbar, weil sie die erforderlichen mechanischen, thermomechanischen und thermochemischen Arbeitsfuttereigenschaften aufweisen.

Die Verwendung von feinteiligem Material, etwa 50-90 Gew.-% mit d₉₀< 100 µm, ist dabei nicht notwendig, sondern es kann mit in der Feuerfesttechnologie üblichen Körnungen bis 8 mm gearbeitet werden. Dadurch wird der Produktionsaufwand zur Bereitstellung der Körnung verringert, insbesondere die Mahlzerkleinerungsenergie.

Zusätzlich werden durch die niedrigere Brenntemperatur der erfindungsgemä-βen Sintermagnesia die Emissionen von CO₂ gesenkt. Auf den Zusatz von Ausbrennstoffen, der sehr aufwändig ist, um diese homogen in den Versatz einzubringen, und der auch die Umweltbelastung durch CO₂ Emissionen steigert, kann erfindungsgemäß verzichtet werden.

Zusätzlich ist die Material- und Gewichtseinsparung für ein zuzustellendes Volumen positiv zu bewerten.

Bisher wurde die Verringerung der Wärmeleitfähigkeit von feuerfesten Zustellungen meist durch mehrschichtige Futteranordnungen aus Arbeits- und Isolierschichten verwirklicht. Besonders in bewegten Aggregaten wie z.B. Zementdrehrohröfen sind Mehrschichtfutter mechanisch sehr empfindlich bzw. bruchanfällig. Außerdem ist der Einbau aufwendig. Um die durch sogenannte Zwischenschichtfutter gegebenen Unsicherheiten im Betrieb zu vermeiden, ist daher der Einbau von Arbeitsfutter ohne Isolierschicht nicht unüblich. Damit verbunden sind aber höhere, das Material eines Aggregatmantels belastende Temperaturen und höhere Wärmeverluste. Ein erfindungsgemäßes Arbeitsfutter kann insbesondere aufgrund seiner geringen Wärmeleitfähigkeit hervorragend auch ohne Zwischenschichtfutter verwendet werden.

Anhand der nachfolgenden Beispiele wird insbesondere die Überlegenheit erfindungsgemäßer grobkeramischer Erzeugnisse gegenüber Erzeugnissen nach dem nächstliegenden Stand der Technik gemäß DE 10 2013 020 732 A1 und gegenüber bekannten dichten Erzeugnissen verdeutlicht.

### Herstellung der erfindungsgemäßen Sintermagnesia für die Beispiele 1 bis 3:

Die Herstellung der Körnung aus der porösen Sintermagnesia fand wie folgt statt:
Ein aus einer Mg(OH)₂ Suspension mittels Vakuumpresse gewonnener Filterkuchen mit einem Feststoffanteil >50 % wurde in einem Ofen getrocknet und schließlich bei 1100 °C calciniert und zerkleinert, so dass aus dem Mg(OH)₂ eine kaustische Magnesia entstand, deren typische Partikelgrößenverteilung d₅₀ = 10 µm betrug.

Mit einer Pelletierpresse wurde die kaustische Magnesia zu mandelförmigen Pellets mit Abmessungen von 13x20x30 mm³ verpresst. Diese grünen Pellets hatten eine Kornrohdichte von 2,0 g/cm³.

Diese Pellets wurden in einem Hochtemperatur-Laborofen mit einem Temperaturprofil gesintert, bei dem die Temperatur mit 2 K/min auf 800 °C erhöht wurde. Nach einer Haltezeit von 6 h wurde die Temperatur mit 2 K/min weiter auf 1450 °C angehoben. Die Verweilzeit bei dieser Temperatur betrug 5 h. Die Abkühlung erfolgte kontinuierlich durch Wärmeabgabe des Hochtemperatur-Laborofens an die Umgebung.

Anschließend wurde die poröse Sintermagnesia gebrochen und durch Sieben klassiert.

Die erfindungsgemäße Körnung aus der porösen Sintermagnesia hatte eine Kornrohdichte von 2,59 g/cm³. Die entsprechende offene Porosität betrug 25,8 Vol.-% (DIN EN 993-18: 2002-11; DIN EN 993-1: 1995-04).

### Beispiel 1:

Im Rahmen des Beispiels 1 wurden Steine auf Basis gleicher Werkstoffe und gleicher mineralogischer Zusammensetzung (84 Gew.-% Magnesia, 16 Gew.% Sinterspinell, Magnesiamehl aus dichter Sintermagnesia), hergestellt:

**Tabelle 3: Zusammensetzung der Versätze für Beispiel 1**

| | **Steine a)** | **Steine b)** | **Steine c)** |
|---|---|---|---|
| **Erfindungsgemäße Sintermagnesia [Gew.-%], 0-4 mm** | 54 | | |
| **Dichte Sintermagnesia [Gew.-%], 0-4 mm** | | 54 | 10 |
| **Dichte Sintermagnesia [Gew.-%], 0,1-0,5 mm** | | | 32 |
| **Sinterspinell [Gew.-%], 0-4 mm** | 16 | 16 | 16 |
| **Magnesiamehl, ≤ 200 µm** | 30 | 30 | 42 |
| **Bindemittel Ligninsulfonat [Gew.-%, bezogen auf Trockenmasse]** | 3,7 | 3,7 | 6 |
| **Verdichtung [MPa]** | 130 | 130 | 40 |
| **Brenntemperatur [°C]** | 1600 | 1600 | 1600 |

Die verwendeten Rohstoffe wiesen folgende Eigenschaften auf:

**Tabelle 4: Eigenschaften der erfindungsgemäßen Sintermagnesia**

| **Erfindungsgemäße Sintermagnesia** | |
|---|---|
| **Kornrohdichte gemäß DIN 993-1:1995-04, 993-18:2002-11** | 2,59 g/cm³ |
| **Kornporosität gemäß DIN 993-1:1995-04, 993-18:2002-11** | 25,8 Vol.-% |

**Tabelle 5: Eigenschaften der dichten Sintermagnesia für die Steine b) und c)**

| **Dichte Sintermagnesia** | |
|---|---|
| **Kornrohdichte gemäß DIN 993-1:1995-04, 993-18:2002-11** | **3,41 g/cm³** |
| **Kornporosität gemäß DIN 993-1:1995-04, 993-18:2002-11** | **1 Vol.-%** |

**Tabelle 6: Eigenschaften des Sinterspinells für die Steine a), b) und c)**

| **Sinterspinell** | |
|---|---|
| **Kornrohdichte gemäß DIN 993-1:1995-04, 993-18:2002-11** | **3,37 g/cm³** |
| **Kornporosität gemäß DIN 993-1:1995-04, 993-18:2002-11** | **2 Vol.-%** |

Die Herstellung der Steine a)-c) erfolgte jeweils wie folgt:
Die entsprechenden Rohstoffe nach Tabelle 3 mit einer Korngrößenverteilung nach Fuller wurden in einem Mischer trocken 3 min gemischt, mit dem flüssigen Bindemittel versehen, und 5 min weiter gemischt. Das Gemisch wurde auf eine hydraulische Presse gebracht und in einem B-Format für Drehofensteine mit einem Pressdruck nach Tabelle 3 verpresst. Die Steine wurden in einem Trockner bei ca. 130 °C getrocknet und anschließend bei 1600 °C in einem Tunnelofen 50 Stunden oxidierend gebrannt. Die Haltezeit bei Maximaltemperatur war 5 h. Es wurden die Brennschwindung durch Abmessen, die Fertigrohdichte durch Abmessen und Wiegen, die offene Porosität nach DIN EN 993-1:1995-04, die Kaltdruckfestigkeit nach DIN EN 993-5:1998-12, die Kaltbiegefestigkeit nach DIN EN 993-6:1995-04, die Gasdurchlässigkeit nach DIN EN 993-4:1995-04 und die Wärmeleitfähigkeit nach dem Heißdraht-(parallel-)verfahren DIN 993-15:2005-14 bestimmt. Die Temperaturwechselbeständigkeit wurde nach DIN EN 993-11:2008-03 an Luft bei einer erhöhten Prüftemperatur von 1100 °C bestimmt:

**Tabelle 7: Eigenschaften der gebrannten Steine des Beispiels 1**

| | **Steine a)** | **Steine b)** | **Steine c)** |
|---|---|---|---|
| **Rohdichte [g/cm³]** | 2,68 | 2,95 | 2,63 |
| **Porosität [Vol.-%]** | 24,1 | 16,0 | 25,2 |
| **Kaltdruckfestigkeit [MPa]** | 88 | 70 | 80 |
| **Kaltbiegefestigkeit [MPa]** | 5,98 | 5,6 | 6,0 |
| **Gasdurchlässigkeit [nPm]** | 0,85 | 1,6 | 1,2 |
| **Brennschwindung [%]** | 1,18 | 0,30 | 0,60 |
| **Porendurchmesser d₅₀ [µm]** | 3,8 | 14,2 | 10,4 |
| **TWB [Zyklen]** | > 30 | > 30 | > 30 |

| **WLF** | | | |
|---|---|---|---|
| **300 °C [W/mK]** | 5,4 | 6,7 | 5,5 |
| **700 °C [W/mK]** | 3,5 | 5,1 | 3,6 |
| **1000 °C [W/mK]** | 2,6 | 4,0 | 2,8 |

Die Steineigenschaften im Vergleich zu den konventionellen dichten Steinen nach b) verändern sich im Falle von a) und auch c), die eine deutlich erhöhte Porosität und eine signifikant verringerte Rohdichte aufweisen, ohne dabei einen negativen Einfluss auf die anderen Steineigenschaften auszuüben. Insbesondere die Gasdurchlässigkeit und der Porendurchmesser sind bei den Steinen nach der vorliegenden Erfindung verringert.

Im erfindungsgemäßen Fall von a), in dem die Körnung aus erfindungsgemäßer poröser Magnesia besteht, ist die Verringerung der Rohdichte und die Erhöhung der offenen Porosität gegenüber b) deutlich.

Zusätzlich ist der mittlere Porendurchmesser d₅₀ gegenüber b) und c) dramatisch verringert, so dass eine verringerte Infiltrationsneigung gegenüber Alkalien und Klinkerschmelzen besteht. Gegenüber b) bleiben die Kaltdruckfestigkeit und die Kaltbiegefestigkeit weiterhin sicher im für dichte Steine typischen Bereich. Die Temperaturwechselbeständigkeit ist mit > 30 Abschreckzyklen ohne Bruch für alle Steinsorten auf dem gleichen notwendig hohen Niveau.

Die Ergebnisse zeigen zudem für die erfindungsgemäßen Steine nach a) deutlich verringerte Wärmeleitfähigkeitswerte gegenüber den dichten Magnesiaspinellsteinen b).

### Beispiel 2:

Für Beispiel 2, Steine d) wurde anstelle des Sinterspinells gemäß Beispiel 1 ein poröser Spinell verwendet:

**Tabelle 8: Zusammensetzung der Versätze für Beispiel 2**

| | **Steine a)** | **Steine b)** | **Steine d)** |
|---|---|---|---|
| **Erfindungsgemäße Magnesia [Gew.-%], 0-4 mm** | 54 | | 54 |
| **Dichte Sintermagnesia [Gew.-%], 0-4 mm** | | 54 | |
| **Sinterspinell [Gew.-%], 0-4 mm** | 16 | 16 | |
| **Poröser Sinterspinell, 0-4 mm** | | | 16 |
| **Magnesiamehl ≤ 200 µm** | 30 | 30 | 30 |
| **Bindemittel Ligninsulfonat [Gew.-%, bezogen auf Trockenmasse]** | 3,7 | 3,7 | 3,7 |
| **Verdichtung [MPa]** | 130 | 130 | 40 |
| **Brenntemperatur [°C]** | 1600 | 1600 | 1600 |

Die Eigenschaften der erfindungsgemäßen Magnesia für d) entsprechen denjenigen des Beispiels 1.

**Tabelle 9: Eigenschaften des porösen Sinterspinells für Steine d)**

| **Poröser Sinterspinell** | |
|---|---|
| **Kornrohdichte gemäß DIN 993-1:1995-04, 993-18:2002-11** | **2,66 g/cm³** |
| **Kornporosität gemäß DIN 993-1:1995-04, 993-18:2002-11** | **25 Vol.-%** |

Die Steine d) wurden analog Bespiel 1 hergestellt und geprüft:

**Tabelle 10: Eigenschaften der gebrannten Steine des Beispiels 2**

| | **Steine a)** | **Steine b)** | **Steine d)** |
|---|---|---|---|
| **Rohdichte [g/cm³]** | 2,68 | 2,95 | 2,64 |
| **Porosität [Vol.-%]** | 24,1 | 16,0 | 25,2 |
| **Kaltdruckfestigkeit [MPa]** | 88 | 70 | 85 |
| **Kaltbiegefestigkeit [MPa]** | 5,98 | 5,6 | 6,4 |
| **Gasdurchlässigkeit [nPm]** | 0,85 | 1,6 | 0,92 |
| **Brennschwindung [%]** | 1,18 | 0,30 | 1,2 |
| **Porendurchmesser d₅₀ [µm]** | 3,8 | 14,2 | 4,2 |
| **TWB [Zyklen]** | > 30 | > 30 | > 30 |

| **WLF** | | | |
|---|---|---|---|
| **300 °C [W/mK]** | 5,4 | 6,7 | 5,2 |
| **700 °C [W/mK]** | 3,5 | 5,1 | 3,3 |
| **1000 °C [W/mK]** | 2,6 | 4,0 | 2,4 |

Die Steineigenschaften im Vergleich zu den Steinen nach Beispiel 1 verändern sich durch die Verwendung von poröser Magnesia und porösem Spinell nur geringfügig, zu beobachten ist jedoch eine weiter verringerte Wärmeleitfähigkeit. Alle anderen positiven mechanischen und thermischen Eigenschaften bleiben erhalten.

### Beispiel 3:

In den ersten Beispielen 1 und 2 wurden die Vorteile der erfindungsgemäßen porösen Sintermagnesia für Magnesiaspinellsteine erläutert. Zum Nachweis der Wirksamkeit der Erfindung bei Produkten aus anderen feuerfesten Werkstoffen wurden im Rahmen des Beispiels 3 Steine auf Basis von Sintermagnesia in Kombination mit Schmelzpleonast (pleonastischem Schmelzspinell) untersucht. Steine e) waren auf Basis von erfindungsgemäßer Sintermagnesia, Steine f) zum Vergleich mit dichter Sintermagnesia. Die Herstellung erfolgte entsprechend Beispiel 1, mit einer Brenntemperatur von 1450 °C:

**Tabelle 11: Zusammensetzung der Versätze für Beispiel 3**

| | **Steine e)** | **Steine f)** |
|---|---|---|
| **Erfindungsgemäße Magnesia [Gew.-%], 0-4 mm** | 54 | |
| **Dichte Sintermagnesia [Gew.-%], 0-4 mm** | | 54 |
| **Schmelzpleonast [Gew.-%], 0-4 mm** | 16 | 16 |
| **Magnesiamehl ≤ 200 µm** | 30 | 30 |
| **Bindemittel Ligninsulfonat [Gew.-%, bezogen auf Trockenmasse]** | 3,7 | 3,7 |
| **Verdichtung [MPa]** | 130 | 130 |
| **Brenntemperatur [°C]** | 1450 | 1450 |

**Tabelle 12: Eigenschaften des Schmelzpleonastes für die Steine e) und f)**

| **Schmelzpleonast** | |
|---|---|
| **Kornrohdichte gemäß DIN 993-1:1995-04, 993-18:2002-11** | **3,74 g/cm³** |
| **Kornporosität gemäß DIN 993-1:1995-04, 993-18:2002-11** | **2 Vol.-%** |

Die nachfolgende Tabelle zeigt die Ergebnisse des Beispiels 3:

**Tabelle 13: Eigenschaften der gebrannten Steine des Beispiels 3**

| | **Steine e)** | **Steine f)** |
|---|---|---|
| **Rohdichte [g/cm³]** | 2,66 | 3,00 |
| **Porosität [Vol.-%]** | 24,8 | 15,7 |
| **Kaltdruckfestigkeit [MPa]** | 98 | 100 |
| **Kaltbiegefestigkeit [MPa]** | 6,25 | 6,75 |
| **Gasdurchlässigkeit [nPm]** | 0,98 | 1,45 |
| **Brennschwindung [%]** | 1,12 | 0,20 |
| **Porendurchmesser d₅₀ [µm]** | 4,8 | 14,6 |
| **TWB [Zyklen]** | > 30 | > 30 |

| **WLF** | | |
|---|---|---|
| **300 °C [W/mK]** | 5,3 | 6,9 |
| **700 °C [W/mK]** | 3,4 | 5,3 |
| **1000 °C [W/mK]** | 2,5 | 4,2 |

Tabelle 4 zeigt, dass die erfindungsgemäße poröse Sintermagnesia auch bei Magnesiapleonaststeinen angewendet werden kann, die Porosität erhöht sich durch die Verwendung der erfindungsgemäßen Sintermagnesia signifikant, alle positiven mechanischen und thermischen Eigenschaften bleiben erhalten.

## Patentansprüche

1. Verfahren zur Herstellung einer Körnung aus Sintermagnesia,
**dadurch gekennzeichnet, dass**
die Sintermagnesia durch Sintern von Presslingen, insbesondere Pellets, aus MgO-Mehl mit einer Korngröße ≤ 200 µm, vorzugsweise aus MgO-Kaustermehl, und anschließendes mechanisches Zerkleinern der Presslinge hergestellt wird, wobei derart gesintert wird, dass die Körnung eine Kornporosität (Gesamtporosität) gemäß DIN EN 993-1:1995-04 und DIN EN 993-18:2002-11 von 15 bis 38 Vol.-%, vorzugsweise von 20 bis 38 Vol.-%, aufweist, wobei bei einer maximalen Temperatur zwischen 1100-1600 °C gesintert wird, wobei die Brenndauer bei der Maximaltemperatur 0,5 h bis 7 h, bevorzugt 2 h bis 6 h, beträgt und das Temperaturregime der Sinterung derart eingestellt wird, dass die Körnung die Kornporosität aufweist.

2. Verfahren nach Anspruch 1,
**dadurch gekennzeichnet, dass**
bei einer maximalen Temperatur zwischen 1200-1600 °C, bevorzugt zwischen 1200-1550 °C, besonders bevorzugt zwischen 1200-1500 °C, gesintert wird.

3. Verfahren nach Anspruch 1,
**dadurch gekennzeichnet, dass**
bei einer maximalen Temperatur ≤ 1550 °C, bevorzugt ≤ 1500 °C, besonders bevorzugt ≤ 1400 °C, gesintert wird.

4. Verfahren nach einem der vorhergehenden Ansprüche,
**dadurch gekennzeichnet, dass**
derart gesintert wird, dass die Körnung eine Kornrohdichte gemäß DIN EN 993-1:1995-04 und DIN EN 993-18:2002-11 von 2,20 bis 2,85 g/cm³, vorzugsweise von 2,20 bis 2,75 g/cm³, aufweist.

5. Verfahren nach einem der vorhergehenden Ansprüche,
**dadurch gekennzeichnet, dass**
Presslinge, insbesondere Pellets, mit einer Rohdichte gemäß DIN 66133:1993-06 von 1,8 bis 2,3 g/cm³, bevorzugt von 1,9 bis 2,2 g/cm³, verwendet werden und/oder Presslinge mit einer Porosität gemäß DIN 66133:1993-06 von 32 bis 52 Vol.-%, bevorzugt von 35 bis 45 Vol.-%, verwendet werden.

6. Verfahren nach einem der vorhergehenden Ansprüche,
**dadurch gekennzeichnet, dass**
das verwendete MgO-Mehl, vorzugsweise das verwendete MgO-Kaustermehl, mindestens 88 Gew.-%, bevorzugt mindestens 95 Gew.%, besonders bevorzugt mindestens 97 Gew.-% MgO, bestimmt mittels Röntgenfluoreszenzanalyse gemäß DIN 12677:2013-02, aufweist.

7. Verfahren nach einem der vorhergehenden Ansprüche,
**dadurch gekennzeichnet, dass**
das verwendete MgO-Mehl, vorzugsweise das verwendete MgO-Kaustermehl, eine Partikelgrößenverteilung mit folgenden Werten aufweist, bestimmt mittels Lasergranulometrie gemäß DIN ISO 13320:2009:
d₉₀ zwischen 80 und 100 µm und/oder d₅₀ zwischen 5 und 15 µm und/oder d₁₀ zwischen 1 und 3 µm.

8. Verfahren nach einem der vorhergehenden Ansprüche,
**dadurch gekennzeichnet, dass**
Presslinge verwendet werden, die, bezogen auf Ihre Trockenmasse, zu mindestens 96 Gew.-%, vorzugsweise zu 100 Gew.-%, aus MgO-Mehl, bevorzugt aus MgO-Kaustermehl, bestehen und/oder kein Magnesitmehl enthalten.

9. Verfahren nach einem der vorhergehenden Ansprüche,
**dadurch gekennzeichnet, dass**
die Körnung aus Sintermagnesia ohne Verwendung von Ausbrennstoffen hergestellt wird.

10. Verfahren nach einem der vorhergehenden Ansprüche,
**dadurch gekennzeichnet, dass**
derart gesintert wird, dass die Körnung aus Sintermagnesia einen mittleren Porendurchmesser d₅₀ von 0.1 bis 10 µm, bevorzugt von 2 bis 8 µm, bestimmt gemäß DIN 66133:1993-06 aufweist und/oder
derart gesintert wird, dass die Körnung aus Sintermagnesia eine Korndruckfestigkeit in Anlehnung an DIN 13055-2016-11 (10 mm statt 20 mm), von 10 bis 30 MPa, bevorzugt von 11 bis 25 MPa, aufweist und/oder
derart gesintert wird, dass die Körnung aus Sintermagnesia folgende Wärmeleitfähigkeiten gemäß DIN EN 821-2:1997-08 aufweist:
| **WLF** | | vorzugsweise |
|---|---|---|
| **400 °C [W/mK]** | 3 bis 9 | 4 bis 8 |
| **800 °C [W/mK]** | 2 bis 7 | 3 bis 6 |
| **1200 °C [W/mK]** | 2 bis 7 | 3 bis 6 |

11. Versatz zur Herstellung eines grobkeramischen, feuerfesten, geformten oder ungeformten Erzeugnisses, insbesondere eines Erzeugnisses für ein Arbeitsfutter oder eine Hintermauerung eines Industrieofens, vorzugsweise einer Zementofenanlage, eines Kalkschacht- oder Kalkdrehrohrofens, eines Magnesit- oder Dolomitofens, oder eines Wärmeofen oder eines Ofen zur Energieerzeugung oder eines Ofens der Stahlerzeugung oder eines Ofens der Nichteisenmetallindustrie,
aufweisend ein Trockenstoffgemisch enthaltend mindestens eine Körnung aus Sintermagnesia sowie additiv zu dem Trockenstoffgemisch zumindest ein flüssiges oder festes Bindemittel für feuerfeste Werkstoffe,
**dadurch gekennzeichnet, dass**
die Körnung aus Sintermagnesia gemäß dem Verfahren nach einem der vorhergehenden Ansprüche hergestellt ist.

12. Versatz nach Anspruch 11,
aufweisend
das Trockenstoffgemisch mit oder bestehend aus folgenden Bestandteilen:
a) zumindest einer groben Körnung aus der gemäß einem der Ansprüche 1 bis 10 hergestellten Sintermagnesia mit einer Korngröße > 200 µm, vorzugsweise in einer Gesamtmenge an gemäß einem der Ansprüche 1 bis 10 hergestellter Sintermagnesia von 10 bis 90 Gew.-%, bevorzugt von 20 bis 80 Gew.-%,
b) zumindest einer Mehlkörnung aus Magnesia, z.B. aus der gemäß einem der Ansprüche 1 bis 10 hergestellten Sintermagnesia, mit einer Korngröße ≤ 200 µm, vorzugsweise in einer Menge von 90 bis 10 Gew.-%, bevorzugt von 80 bis 20 Gew.-%,
c) vorzugsweise zumindest einer weiteren Körnung aus einem feuerfesten Werkstoff, vorzugsweise in einer Gesamtmenge an weiterer Körnung von 0,5 bis 40 Gew.-%, bevorzugt von 3 bis 30 Gew.-%,
d) gegebenenfalls zumindest einem Zusatzstoff für feuerfeste Werkstoffe, vorzugsweise in einer Gesamtmenge an Zusatzstoff < 5 Gew.-%
e) gegebenenfalls zumindest einem Zusatzmittel für feuerfeste Werkstoffe, vorzugsweise in einer Gesamtmenge von < 5 Gew.-%,
sowie additiv zu dem Trockenstoffgemisch das zumindest eine flüssige oder feste Bindemittel für feuerfeste Werkstoffe, vorzugsweise in einer Gesamtmenge von 1 bis 9 Gew.-%, bevorzugt von 2.5 bis 6 Gew.-%, bezogen auf die gesamte Trockenmasse des Trockenstoffgemisches.

13. Versatz nach Anspruch 11 oder 12,
**dadurch gekennzeichnet, dass**
der Versatz zu mindestens 90 Gew.-%, bevorzugt zu mindestens 99 Gew.-%, besonders bevorzugt zu 100 Gew.-%, aus Bindemittel und dem Trockenstoffgemisch, bezogen auf die Gesamtmasse des Versatzes, besteht.

14. Versatz nach einem der Ansprüche 11 bis 13,
**dadurch gekennzeichnet, dass**
das Trockenstoffgemisch ≥ 50 Gew.-%, bevorzugt ≥ 60 Gew.-%, besonders bevorzugt ≥ 70 Gew.-% der groben Körnung aus der gemäß einem der Ansprüche 1 bis 10 hergestellten Sintermagnesia aufweist.

15. Versatz nach einem der Ansprüche 11 bis 14,
**dadurch gekennzeichnet, dass**
die grobe Körnung aus poröser Sintermagnesia eine maximale Korngröße ≤ 8 mm, bevorzugt ≤ 6 mm, besonders bevorzugt ≤ 4 mm, aufweist und/oder die Kornverteilung der groben Körnung aus Sintermagnesia stetig ist.

16. Versatz nach einem der Ansprüche 12 bis 15,
**dadurch gekennzeichnet, dass**
die weitere Körnung aus einem Rohstoff aus der folgenden Gruppe besteht:
Magnesiumaluminat-Spinell, Bauxit, Tonerde, Hercynit, Pleonast, Chromerz, pleonastischem Spinell, Zirkonoxid, Olivin und/oder Forsterit.

17. Versatz nach einem der Ansprüche 12 bis 16,
**dadurch gekennzeichnet, dass**
die weitere Körnung eine minimale Korngröße > 0 mm und/oder eine maximale Korngröße ≤ 8 mm, bevorzugt ≤ 6 mm, besonders bevorzugt ≤ 4 mm aufweist und/oder die Kornverteilung der weiteren Körnung stetig ist.

18. Versatz nach einem der Ansprüche 12 bis 17,
**dadurch gekennzeichnet, dass**
es sich bei dem flüssigen Bindemittel um ein Bindemittel aus der folgenden Gruppe handelt:
Wärmehärtendes Kunstharzbindemittel, insbesondere Phenol-Formaldehydharz oder Melasse oder Ligninsulfonat, oder ein schwefelfreies Bindemittel, insbesondere um ein Bindemittel auf Basis Dextrose, eine organische Säure, einen Al₂O₃-Binder, Phosphorsäure, einen Phosphatbinder, Wasserglas, Ethylsilicat, oder ein Sulfat, z. B. Magnesiumsulfat oder Aluminiumsulfat, oder ein Sol-Gel-System.

19. Grobkeramisches, feuerfestes, geformtes oder ungeformtes Erzeugnis, insbesondere für ein Arbeitsfutter eines Industrieofens, vorzugsweise einer Zementofenanlage, eines Kalkschacht- oder Kalkdrehrohrofens, eines Magnesit- oder Dolomitofens, oder eines Wärmeofens oder eines Ofens zur Energieerzeugung oder eines Ofens der Stahlerzeugung oder eines Ofens der Nichteisenmetallindustrie, wobei das Erzeugnis mindestens eine Körnung aus Sintermagnesia aufweist,
**dadurch gekennzeichnet, dass**
die Körnung aus Sintermagnesia gemäß dem Verfahren gemäß einem der Ansprüche 1 bis 10 hergestellt ist.

20. Erzeugnis nach Anspruch 19,
**dadurch gekennzeichnet, dass**
das Erzeugnis hergestellt ist aus einem Versatz gemäß einem der Ansprüche 11 bis 18.

21. Erzeugnis nach Anspruch 19 oder 20,
**dadurch gekennzeichnet, dass**
das geformte Erzeugnis ein grüner, insbesondere gepresster, Formkörper, bevorzugt ein Stein,
oder
ein getemperter Formkörper, bevorzugt ein Stein,
oder
ein gebrannter Formkörper, bevorzugt ein Stein, ist.

22. Erzeugnis nach Anspruch 21,
**dadurch gekennzeichnet, dass**
der gebrannte Formkörper eine Wärmeleitfähigkeit nach dem Heißdraht-(parallel-)verfahren gemäß DIN 993-15:2005-14 bei 300 °C von 4,0 bis 6,0 W/mK, bevorzugt von 4,5 bis 5,8 W/mK, bei 700 °C von 3,0 bis 5,0 W/mK, bevorzugt von 3,0 bis 4,8 W/mK, und bei 1000 °C von 2,0 bis 3,5 W/mK, bevorzugt von 2,0 bis 3,2 W/mK,
und/oder
eine offene Porosität von 22 bis 45 Vol.-%, bevorzugt 23 bis 35 Vol.-%, bestimmt gemäß DIN 993-1:1995-4,
und/oder
einen Mittelwert der Porendurchmesserverteilung d₅₀, bestimmt gemäß DIN 66133:1993-06, von 0,5 bis 10 µm, bevorzugt von 2 bis 10 µm,
und/oder
eine Rohdichte von 1,9 bis 2,9 g/cm³, insbesondere von 2,0 bis 2,8 g/cm³, bestimmt gemäß DIN 993-1 :1995-04, aufweist.

23. Erzeugnis nach Anspruch 21 oder 22,
**dadurch gekennzeichnet, dass**
der gebrannte Formkörper eine Kaltdruckfestigkeit gemäß DIN EN 993-5:1998-12 von 30 bis 100 MPa, insbesondere von 45 bis 90 MPa, und/oder
eine Kaltbiegefestigkeit gemäß DIN EN 993-6:1995-04 von 2 bis 18 MPa, insbesondere von 3 bis 10 MPa,
und/oder
eine Gasdurchlässigkeit nach DIN EN 993-4:1995-04 von 0,2 bis 8 nPm, insbesondere von 0,5 bis 6 nPm, und/oder
eine Temperaturwechselbeständigkeit, bestimmt nach DIN EN 993-11:2008-03 an Luft bei einer Prüftemperatur von 1100 °C, von > 20 Abschreckzyklen, insbesondere > 30 Abschreckzyklen, aufweist.

24. Verfahren zur Herstellung eines feuerfesten geformten Erzeugnisses nach einem der Ansprüche 19 bis 23 aus einem Versatz gemäß einem der Ansprüche 11 bis 18,
**gekennzeichnet durch**
folgende Verfahrensschritte:
a) Mischen des Trockenstoffgemisches mit Bindemittel und/oder Wasser zu einer bildsamen Masse,
b) Formen, insbesondere Pressen, der Masse zu einem grünen Formkörper,
c) Vorzugsweise Trocknen des grünen Formkörpers,
d) Vorzugsweise Tempern oder Brennen des grünen Formkörpers.

25. Verfahren nach Anspruch 24,
**dadurch gekennzeichnet, dass**
der Formkörper bei einer Temperatur von 1200 bis 1800 °C, vorzugsweise von 1400 bis 1700 °C, gebrannt wird.

26. Verwendung einer gemäß dem Verfahren gemäß einem der Ansprüche 1 bis 10 hergestellten Körnung aus Sintermagnesia zur Herstellung eines Erzeugnisses gemäß einem der Ansprüche 19 bis 23.

27. Verwendung nach Anspruch 26,
**dadurch gekennzeichnet, dass**
zur Herstellung des Erzeugnisses ein Versatzes nach einem der Ansprüche 11 bis 18 verwendet wird.

28. Zustellung eines großvolumigen Industrieofens, vorzugsweise eines Brennofens der Nichtmetallindustrie, bevorzugt einer Zementofenanlage, eines Kalkschacht- oder Kalkdrehrohrofens, eines Magnesit- oder Dolomitofens, oder eines Wärmeofens oder eines Ofens zur Energieerzeugung oder eines Ofens der Stahlerzeugung oder eines Ofens der Nichteisenmetallindustrie,
**dadurch gekennzeichnet, dass**
die Zustellung zumindest ein Erzeugnis gemäß einem der Ansprüche 19 bis 23 und/oder hergestellt gemäß Anspruch 24 oder 25 aufweist.

29. Zustellung nach Anspruch 28,
**dadurch gekennzeichnet, dass**
die Zustellung ein Arbeitsfutter aufweist, welches das zumindest eine feuerfeste Erzeugnis aufweist, wobei das Arbeitsfutter vorzugsweise in einem Ein- oder Mehrschichtmauerwerk eingebaut ist.

30. Zustellung nach Anspruch 28 oder 29,
**dadurch gekennzeichnet, dass**
die Zustellung eine isolierende Hintermauerung aufweist, welche das zumindest eine feuerfeste Erzeugnis aufweist.

31. Großvolumiger Industrieofen, vorzugsweise Brennofen der Nichtmetallindustrie, bevorzugt Zementofenanlage, Kalkschacht- oder Kalkdrehrohrofen, Magnesit- oder Dolomitofen, oder Wärmeofen oder Ofen zur Energieerzeugung oder Ofen der Stahlerzeugung oder Ofen der Nichteisenmetallindustrie,
**dadurch gekennzeichnet, dass**
der Industrieofen eine Zustellung gemäß einem der Ansprüche 28 bis 30 aufweist.

## Claims

1. A method for producing a granular material of sintered magnesia,
**characterized in that**
the sintered magnesia is produced by sintering of pressed articles, in particular pellets, of MgO meal with a grain size ≤ 200 µm, preferably of caustic MgO meal, and subsequent mechanical comminution of the pressed articles, wherein the sintering takes place in such a way that the granular material has a grain porosity (total porosity) according to DIN EN 993-1:1195-04 and DIN EN 993-18:2000-11 of 15 to 38 vol%, preferably 20 to 38 vol%, wherein sintering takes place at a temperature between 1100-1600° C, wherein the firing duration at the maximum temperature is 0.5 h to 7 h, preferably 2 h to 6h, and the temperature regime of the sintering is set in such a way that the granular material has the grain porosity.

2. The method according to Claim 1,
**characterized in that**
sintering takes place at a maximum temperature between 1200-1600° C, preferably between 1200-1550° C, particularly preferably between 1200-1500° C.

3. The method according to claim 1,
**characterized in that**
sintering takes place at a maximum temperature ≤ 1550° C, preferably ≤ 1500° C, particularly preferably ≤ 1400° C.

4. The method according to one of the preceding claims,
**characterized in that**
sintering takes place in such a way that the granular material has a grain bulk density, according to DIN EN 993-1:1995-04 and DIN EN 993-18:2002-11, of 2.20 to 2.85 g/cm³, preferably 2.20 to 2.75 g/cm³.

5. The method according to one of the preceding claims,
**characterized in that**
pressed articles, in particular pellets, are used having a bulk density according to DIN 66133:1993-06 of 1.8 to 2.3 g/cm³, preferably 1.9 to 2.2 g/cm³ and/or pressed articles are used having a porosity, according to DIN 66133:1993-06, of 32 to 52 vol%, preferably 35 to 45 vol%.

6. The method according to one of the preceding claims,
**characterized in that**
the used MgO meal, preferably the used caustic MgO meal, comprises at least 88 wt%, preferably at least 95 wt%, particularly preferably at least 97 wt% MgO, determined by x-ray fluorescence analysis according to DIN 12677:2013-02.

7. The method according to one of the preceding claims,
**characterized in that**
the used MgO meal, preferably the used caustic MgO meal, has a particle size distribution having the following values, determined using laser granulometry according to DIN ISO 13320:2009:
d₉₀ between 80 and 100 µm and/or d₅₀ between 5 and 15 µm and/or d₁₀ between 1 and 3 µm.

8. The method according to one of the preceding claims,
**characterized in that**
pressed articles are used that consist, relative to their dry mass, of at least 96 wt%, preferably of 100 wt%, of MgO meal, preferably of caustic MgO meal, and/or contain no magnesite meal.

9. The method according to one of the preceding claims,
**characterized in that**
the granular material made of sintered magnesia is produced without the use of burnout materials.

10. The method according to one of the preceding claims,
**characterized in that**
sintering takes place in such a way that the granular material made of sintered magnesia has an average pore diameter d₅₀ of 0.1 to 10 µm, preferably 2 to 8 µm, determined according to DIN 66133:1993-06, and/or
sintering takes place in such a way that the granular material made of sintered magnesia has a grain compression strength, based on DIN 13055-2016-11 (10 mm instead of 20 mm), of 10 to 30 MPa, preferably 11 to 25 MPa,
and/or
sintering takes place in such a way that the granular material made of sintered magnesia has the following thermal conductivity values according to DIN EN 821-2:1997-08:
| **TC** | | preferably |
|---|---|---|
| **400 °C [W/mK]** | 3 to 9 | 4 to 8 |
| **800 °C [W/mK]** | 2 to 7 | 3 to 6 |
| **1200 °C [W/mK]** | 2 to 7 | 3 to 6 |

11. A batch for producing a coarse ceramic, refractory, shaped or unshaped product, in particular a product for a working casing or a backing of an industrial furnace, preferably of a cement kiln installation, a lime brick shaft or lime rotary kiln, a magnesite kiln or dolomite kiln, or of a heating kiln or of a kiln for energy production or of a kiln for steel production or of a kiln of the nonferrous metal industry, comprising a dry material mixture containing at least one granular material made of sintered magnesia as well as, additive to the dry material mixture, at least one liquid or solid binder for refractory materials,
**characterized in that**
the granular material made of sintered magnesia is produced according to the method according to one of the preceding claims.

12. The batch according to Claim 11, comprising
the dry material mixture having or consisting of the following components:
a) at least one coarse granular material made of the sintered magnesia produced according to one of claims 1 to 10 having a grain size > 200 µm, preferably in a total quantity of sintered magnesia produced according to one of claims 1 to 10 of 10 to 90 wt%, preferably 20 to 80 wt%,
b) at least one powdered granular material made of magnesia, e.g. the sintered magnesia produced according to one of claims 1 to 10, having a grain size ≤ 200 µm, preferably in a quantity of 90 to 10 wt%, preferably 80 to 20 wt%,
c) preferably at least one further granular material made of a refractory material, preferably in a total quantity of further granular material of 0.5 to 40 wt%, preferably 3 to 30 wt%,
d) if applicable, at least one additive for refractory materials, preferably in a total quantity of additive < 5 wt%,
e) if applicable, at least one admixture for refractory materials, preferably in a total quantity of < 5 wt%,
as well as, additive to the dry material mixture, the at least one liquid or solid binder for refractory materials, preferably in a total quantity of from 1 to 9 wt%, preferably 2.5 to 6 wt%, relative to the total dry mass of the dry material mixture.

13. The batch according to Claim 11 or 12,
**characterized in that**
the batch consists of at least 90 wt%, preferably of at least 99 wt%, particularly preferably of 100 wt%, of binder and the dry material mixture, relative to the total mass of the batch.

14. The batch according to one of claims 11 to 13,
**characterized in that**
the dry material mixture comprises ≥ 50 wt%, preferably ≥ 60 wt%, particularly preferably ≥ 70 wt%, of the coarse granular material made of the sintered magnesia produced according to one of claims 1 to 10.

15. The batch according to one of claims 11 to 14,
**characterized in that**
the coarse granular material made of porous sintered magnesia has a maximum grain size ≤ 8 mm, preferably ≤ 6 mm, particularly preferably ≤ 4 mm, and/or the grain distribution of the coarse granular material made of sintered magnesia is steady.

16. The batch according to one of Claims 12 to 15,
**characterized in that**
the further granular material consists of a raw material from the following group:
magnesium aluminate spinel, bauxite, alumina, hercynite, pleonaste, chromium ore, pleonastic spinel, zirconium oxide, olivine, and/or forsterite.

17. The batch according to one of Claims 12 to 16,
**characterized in that**
the further granular material has a minimum grain size > 0 mm and/or a maximum grain size ≤ 8 mm, preferably ≤ 6 mm, particularly preferably ≤ 4 mm, and/or the grain distribution of the further granular material is steady.

18. The batch according to one of Claims 12 to 17,
**characterized in that**
the liquid binder is a binder from the following group:
thermally curing synthetic resin binder, in particular phenol formaldehyde resin, or molasses or lignin sulfonate, or a sulfur-free binder, in particular a binder based on dextrose, an organic acid, saccharose, an Al₂O₃ binder, phosphoric acid, a phosphate binder, water glass, ethyl silicate, or a sulfate, e.g. magnesium sulfate or aluminum sulfate, or a sol-gel system.

19. A coarse ceramic, refractory, shaped or unshaped product, in particular for a working casing of an industrial furnace, preferably of a cement kiln installation, a lime shaft kiln or a lime rotary kiln, a magnesite or dolomite kiln, or of a heating kiln or of a kiln for energy production or of a kiln for steel production or of a kiln of the nonferrous metal industry, the product comprising at least one granular material made of sintered magnesia,
**characterized in that**
the granular material made of sintered magnesia is produced according to the method according to one of Claims 1 to 10.

20. The product according to Claim 19,
**characterized in that**
the product is produced from a batch according to one of Claims 11 to 18.

21. The product according to Claim 19 or 20,
**characterized in that**
the shaped product is a green, in particular pressed, shaped body, preferably a brick,
or
a tempered shaped body, preferably a brick,
or
a fired shaped body, preferably a brick.

22. The product according to Claim 21,
**characterized in that**
the fired shaped body has a thermal conductivity according to the hot-wire (parallel) method according to DIN 993-15:2005-14 of 4.0 to 6.0 W/mK, preferably 4.5 to 5.8 W/mK, at 300° C, 3.0 to 5.0 W/mK, preferably 3.0 to 4.8 W/mK, at 700° C and 2.0 to 3.5 W/mK, preferably 2.0 to 3.2 W/mK, at 1000° C,
and/or
an open porosity of 22 to 45 vol%, preferably 23 to 35 vol%, determined according to DIN 993-1:1995-4,
and/or
an average value of the pore diameter distribution d₅₀, determined according to DIN 66133:1993-06, of 0.5 to 10 µm, preferably 2 to 10 µm, and/or
a bulk density of from 1.9 to 2.9 g/cm³, in particular 2.0 to 2.8 g/cm³, determined according to DIN 993-1:1995-04.

23. The product according to claim 21 or 22,
**characterized in that**
the fired shaped body has a cold compression strength according to DIN EN 993-5:1998-12 of 30 to 100 MPa, in particular 45 to 90 MPa,
and/or
a cold bending strength according to DIN EN 993-6:1995-04 of from 2 to 18 MPa, in particular 3 to 10 MPa,
and/or
a gas permeability according to DIN EN 993-4:1995-04 of from 0.2 to 8 nPm, in particular 0.5 to 6 nPm.
and/or
a thermal shock resistance, determined according to DIN EN 993-11:2008-03 in air at a test temperature of 1100° C, of > 20 quenching cycles, in particular > 30 quenching cycles.

24. A method for producing a refractory shaped product according to one of claims 19 to 23 from a batch according to one of Claims 11 to 18,
**characterized by**
the following method steps:
a) mixing the dry material mixture with binder and/or water to form a plastic mass,
b) shaping, in particular pressing, of the mass to form a green shaped body,
c) preferably drying of the green shaped body,
d) preferably tempering or firing of the green shaped body.

25. The method according to Claim 24,
**characterized in that**
the shaped body is fired at a temperature of 1200 to 1800° C, preferably 1400 to 1700° C.

26. Use of a granular material from sintered magnesia produced according to one of claims 1 to 10 for the production of a product according to one of claims 19 to 23.

27. Use according to claim 26,
**characterized in that**
a batch according to one of claims 11 to 18 is used for the production of the product.

28. A lining of a large-volume industrial furnace, preferably of a burning kiln of the non-metallic industry, preferably of a cement kiln installation, a lime shaft kiln or lime rotary kiln, a magnesite kiln or dolomite kiln, or of a heating kiln or of a kiln for energy production or of a kiln for steel production or of a kiln of the nonferrous metal industry,
**characterized in that**
the lining comprises at least one product according to one of Claims 19 to 23 and/or produced according to Claim 24 or 25.

29. The lining according to claim 28,
**characterized in that**
the lining has a working casing that comprises the at least one refractory product, wherein preferably the working casing is installed in a one-layer or a multilayer masonry structure.

30. The lining according to claim 28 or 29,
**characterized in that**
the lining has an insulating backing that comprises the at least one refractory product.

31. A large-volume industrial furnace, preferably a burning kiln of the non-metallic industry, preferably a cement kiln installation, a lime shaft kiln or lime rotary kiln, a magnesite or dolomite kiln, or a heating kiln or a kiln for energy production or a kiln for steel production or a kiln of the nonferrous metal industry,
**characterized in that**
the industrial furnace has a lining according to one of claims 28 to 30.

## Revendications

1. Procédé de production d'une matériau granulaire de magnésie frittée,
**caractérisé en ce que**
la magnésie frittée est produite par frittage de pièces pressées, en particulier de pellets, en farine de MgO d'une taille de grain de ≤ 200 µm, de préférence en farine de MgO caustique, et ensuite par broyage mécanique des pièces pressées, le frittage étant effectué de telle façon que le matériau granulaire comprend une porosité de grain (porosité totale) selon DIN EN 993-1:1995-04 et DIN EN 993-18:2002-11 de 15 à 38 % en volume, de préférence de 20 à 38 % en volume, le frittage étant effectué à une température maximale comprise entre 1100 et 1600 °C, la durée de cuisson à la température maximale étant de 0,5 h à 7 h, de préférence de 2 h à 6 h, et le régime de température du frittage étant réglé de manière que le matériau granulaire comprend la porosité de grain.

2. Procédé selon la revendication 1,
**caractérisé en ce que**
le frittage est effectué à une température maximale comprise entre 1200-1600 °C, de préférence entre 1200-1550 °C, de manière particulièrement préférée entre 1200-1500 °C.

3. Procédé selon la revendication 1,
**caractérisé en ce que**
le frittage est effectué à une température maximale de ≤ 1550 °C, de préférence de ≤ 1500 °C, de manière particulièrement préférée de ≤ 1400 °C.

4. Procédé selon l'une quelconque des revendications précédentes,
**caractérisé en ce que**
le frittage est effectué de telle façon que le matériau granulaire comprend une densité apparente de grain selon DIN EN 993-1:1995-04 et DIN EN 993-18:2002-11 de 2,20 à 2,85 g/cm³, de préférence de 2,20 à 2,75 g/cm³.

5. Procédé selon l'une quelconque des revendications précédentes,
**caractérisé en ce que**
des pièces pressées, en particulier des pellets, ayant une masse volumique apparente selon DIN 66133:1993-06 de 1,8 à 2,3 g/cm³, de préférence de 1,9 à 2,2 g/cm³, sont utilisées et/ou des pièces pressées ayant une porosité selon DIN 66133:1993-06 de 32 à 52 % en volume, de préférence de 35 à 45 % en volume, sont utilisées.

6. Procédé selon l'une quelconque des revendications précédentes,
**caractérisé en ce que**
la farine de MgO utilisée, de préférence la farine MgO caustique utilisée, comprend au moins 88 % en poids, de préférence au moins 95 % en poids, de manière particulièrement préférée au moins 97 % en poids de MgO, déterminé par analyse de fluorescence X selon DIN 12677:2013-02.

7. Procédé selon l'une quelconque des revendications précédentes,
**caractérisé en ce que**
la farine de MgO utilisée, de préférence la farine de MgO caustique utilisée, comprend une distribution granulométrique ayant les valeurs suivantes, déterminées par granulométrie laser selon DIN ISO 13320:2009:
d₉₀ entre 80 et 100 µm et/ou d₅₀ entre 5 et 15 µm et/ou d₁₀ entre 1 et 3 µm.

8. Procédé selon l'une quelconque des revendications précédentes,
**caractérisé en ce que**
des pièces pressées sont utilisées qui, par rapport à leur matière sèche, sont constitués d'au moins 96 % en poids, de préférence de 100 % en poids, de farine de MgO, de préférence de farine de MgO caustique, et/ou qui ne contiennent pas de farine de magnésite.

9. Procédé selon l'une quelconque des revendications précédentes,
**caractérisé en ce que**
le matériau granulaire de magnésie frittée est produit sans utilisation des matériaux combustibles.

10. Procédé selon l'une quelconque des revendications précédentes,
**caractérisé en ce que**
le frittage est effectué de telle façon que le matériau granulaire de magnésie frittée comprend un diamètre moyen de pores d₅₀ de 0,1 à 10 µm, de préférence de 2 à 8 µm, déterminé selon DIN 66133:1993-06
et/ou
le frittage est effectué de telle façon que le matériau granulaire de magnésie frittée comprend une résistance à la compression des grains selon la norme DIN 13055-2016-11 (10 mm au lieu de 20 mm) de 10 à 30 MPa, de préférence de 11 à 25 MPa
et/ou
le frittage est effectué de telle façon que le matériau granulaire de magnésie frittée comprend les conductivités thermiques suivantes selon DIN EN 821-2:1997-08 :
| **CT** | | de préférence |
|---|---|---|
| **400 °C [W/mK]** | 3 à 9 | 4 à 8 |
| **800 °C [W/mK]** | 2 à 7 | 3 à 6 |
| **1200 °C [W/mK]** | 2 à 7 | 3 à 6 |

11. Mélange pour la production d'un produit en céramique grossière, réfractaire, moulé ou non moulé, en particulier d'un produit pour un revêtement de travail ou une maçonnerie arrière d'un four industriel, de préférence d'un installation de four à ciment, d'un four à chaux à puits ou d'un four rotatif à chaux, d'un four à magnésite ou à dolomite, ou d'un four de chauffage ou d'un four pour la production d'énergie ou d'un four de production d'acier ou d'un four de l'industrie des métaux non ferreux, comprenant un composé de matières sèches contenant au moins un matériau granulaire de magnésie frittée ainsi que, par addition au composé de matières sèches, au moins un liant liquide ou solide pour matériaux réfractaires,
**caractérisé en ce que**
le matériau granulaire de magnésie frittée est produit selon le procédé de l'une des revendications précédentes.

12. Mélange selon la revendication 11,
comprenant
le composé de matière sèche contenant ou consistant en les composants suivants :
a) d'au moins un matériau granulaire grossier constitué de la magnésie frittée produit selon l'une quelconque des revendications 1 à 10 ayant une taille de grain de > 200 µm, de préférence en une quantité totale de magnésie frittée produite selon l'une des revendications 1 à 10 de 10 à 90 % en poids, de préférence de 20 à 80 % en poids,
b) d'au moins un matériau granulaire en farine de magnésie, par exemple de la magnésie frittée produite selon l'une des revendications 1 à 10 ayant une taille de grain ≤ 200 µm, de préférence en une quantité de 90 à 10 % en poids, de préférence de 80 à 20 % en poids,
c) de préférence au moins un autre matériau granulaire constitué d'un matériau réfractaire, de préférence en une quantité totale d'autre matériau granulaire de 0,5 à 40 % en poids, de préférence de 3 à 30 % en poids,
d) éventuellement au moins un additif pour matériaux réfractaires, de préférence en une quantité totale d'additif de < 5 % en poids
e) éventuellement au moins un adjuvant pour matériaux réfractaires, de préférence en une quantité totale de < 5 % en poids,
ainsi qu'en additif au composé de matière sèche, le au moins liant liquide ou solide pour matériaux réfractaires, de préférence en une quantité totale de 1 à 9 % en poids, de préférence de 2,5 à 6 % en poids, par rapport à la masse sèche totale du composé de matière sèche.

13. Mélange selon la revendication 11 ou 12,
**caractérisé en ce que**
le mélange est constitué à au moins 90 % en poids, de préférence à au moins 99 % en poids, de manière particulièrement préférée à 100 % en poids, de liant et du composé de matière sèche, par rapport à la masse totale du mélange.

14. Mélange selon l'une des revendications 11 à 13,
**caractérisé en ce que**
le composé de matière sèche comprend ≥ 50 % en poids, de préférence ≥ 60 % en poids, de manière particulièrement préférée ≥ 70 % en poids du matériau granulaire grossier constitué de magnésie frittée produite selon l'une quelconque des revendications 1 à 10.

15. Mélange selon l'une des revendications 11 à 14,
**caractérisé en ce que**
le matériau granulaire grossier de magnésie frittée poreuse comprend une taille de grain maximale de ≤ 8 mm, de préférence de ≤ 6 mm, de manière particulièrement préférée de ≤ 4 mm, et/ou la distribution des grains du matériau granulaire grossier de magnésie frittée est constante.

16. Mélange selon l'une des revendications 12 à 15,
**caractérisé en ce que**
l'autre matériau granulaire est constitué d'une matière première du groupe suivant :
spinelle aluminate de magnésium, bauxite, alumine, hercynite, pléo-naste, minerai de chrome, spinelle pléonastique, oxyde de zirconium, olivine et/ou forsterite.

17. Mélange selon l'une des revendications 12 à 16,
**caractérisé en ce que**
l'autre matériau granulaire comprend une taille de grain minimale de > 0 mm et/ou une taille de grain maximale de ≤ 8 mm, de préférence de ≤ 6 mm, de manière particulièrement préférée de ≤ 4 mm et/ou la distribution des grains de l'autre matériau granulaire est constante.

18. Mélange selon l'une des revendications 12 à 17,
**caractérisé en ce que**
le liant liquide est un liant choisi parmi le groupe suivant :
Liant de résine thermodurcissable, en particulier résine phénol-formaldéhyde ou mélasse ou lignosulfonate, ou un liant sans soufre, en particulier, d'un liant à base de dextrose, d'un acide organique, d'un liant Al₂O₃, d'acide phosphorique, d'un liant phosphate, de verre soluble, de silicate d'éthyle, ou un sulfate, par exemple sulfate de magnésium ou sulfate d'aluminium, ou un système sol-gel.

19. Produit en céramique grossière, réfractaire, moulé ou non moulé, en particulier pour un revêtement de travail d'un four industriel, de préférence d'un installation de four à ciment, d'un four à chaux à puits ou d'un four rotatif à chaux, d'un four à magnésite ou à dolomite, ou d'un four de chauffage ou d'un four de production d'énergie ou d'un four de production d'acier ou d'un four de l'industrie des métaux non ferreux, le produit comprenant au moins un matériau granulaire de magnésie frittée,
**caractérisé en ce que**
le matériau granulaire de magnésie frittée est produit selon le procédé selon l'une des revendications 1 à 10.

20. Produit selon la revendication 19,
**caractérisé en ce que**
le produit est obtenu d'un mélange selon l'une quelconque des revendications 11 à 18.

21. Produit selon la revendication 19 ou 20,
**caractérisé en ce que**
le produit moulé est un corps moulé vert, en particulier pressé, de préférence une pierre,
ou
un corps moulé recuit, de préférence une pierre,
ou
est un corps moulé cuit, de préférence une pierre.

22. Produit selon la revendication 21,
**caractérisé en ce que**
le corps moulé cuit comprend une conductivité thermique selon le procédé au fil chaud (parallèle) selon DIN 993-15:2005-14 à 300 °C de 4,0 à 6,0 W/mK, de préférence de 4,5 à 5,8 W/mK, à 700 °C de 3,0 à 5,0 W/mK, de préférence de 3,0 à 4,8 W/mK, et à 1000 °C de 2,0 à 3,5 W/mK, de préférence de 2,0 à 3,2 W/mK,
et/ou
une porosité ouverte de 22 à 45 % en volume, de préférence de 23 à 35 % en volume, déterminée selon la norme DIN 993-1:1995-4,
et/ou
une valeur moyenne de la distribution du diamètre des pores d₅₀, déterminée selon la norme DIN 66133:1993-06, de 0,5 à 10 µm, de préférence de 2 à 10 µm,
et/ou
une masse volumique apparente de 1,9 à 2,9 g/cm³, en particulier de 2,0 à 2,8 g/cm³, déterminée selon la norme DIN 993-1:1995-04.

23. Produit selon la revendication 21 ou 22,
**caractérisé en ce que**
le corps moulé cuit comprend une résistance à la pression à froid selon DIN EN 993-5:1998-12 de 30 à 100 MPa, en particulier de 45 à 90 MPa, et/ou
une résistance à la flexion à froid selon DIN EN 993-6:1995-04 de 2 à 18 MPa, en particulier de 3 à 10 MPa,
et/ou
une perméabilité aux gaz selon la norme DIN EN 993-4:1995-04 de 0,2 à 8 nPm, en particulier de 0,5 à 6 nPm, et/ou
une résistance aux chocs thermiques, déterminée selon DIN EN 993-11:2008-03 dans l'air à une température de test de 1100 °C, de > 20 cycles de trempe, en particulier de > 30 cycles de trempe.

24. Procédé de production d'un produit réfractaire moulé selon l'une quelconque des revendications 19 à 23 produit d'un mélange selon l'une des revendications 11 à 18,
**caractérisé par**
les étapes de procédure suivantes :
a) Mixage du composé de matière sèche avec un liant et/ou de l'eau pour obtenir une masse homogène,
b) Moulage, en particulier pressage, de la masse en un corps moulé vert,
c) De préférence, séchage du corps moulé vert,
d) De préférence, recuire ou cuire le corps moulé vert.

25. Procédé selon la revendication 24,
**caractérisé en ce que**
le corps moulé est cuit à une température de 1200 à 1800 °C, de préférence de 1400 à 1700 °C.

26. Utilisation d'un matériau granulaire de magnésie frittée produit selon l'une quelconque des revendications 1 à 10 pour produire un produit selon l'une quelconque des revendications 19 à 23.

27. Utilisation selon la revendication 26,
**caractérisé en ce que**
un mélange selon l'une des revendications 11 à 18 est utilisé pour la production du produit.

28. Revêtement d'un four industriel de grand volume, de préférence un fourneau de l'industrie non métallique, de préférence un installation de four à ciment, un four à chaux à puits ou un four rotatif à chaux, un four à magnésite ou à dolomite, ou un four de chauffage ou un four de production d'énergie ou un four de production d'acier ou un four de l'industrie des métaux non ferreux,
**caractérisé en ce que**
le revêtement comprend d'au moins un produit selon l'une des revendications 19 à 23 et/ou produit selon la revendication 24 ou 25.

29. Revêtement selon la revendication 28,
**caractérisé en ce que**
le revêtement présente un revêtement de travail qui comprend l'un au moins de produit réfractaire, le revêtement de travail étant de préférence intégré dans une maçonnerie à une ou plusieurs couches.

30. Revêtement selon la revendication 28 ou 29,
**caractérisé en ce que**
le revêtement comprend une maçonnerie arrière isolante qui comprend l'un au moins de produit réfractaire.

31. Four industriel à grand volume, de préférence fourneau de l'industrie non métallique, de préférence installation de four à ciment, four à chaux à puits ou four rotatif à chaux, four à magnésite ou four à dolomite, ou four de chauffage ou four de production d'énergie ou four de la production d'acier ou four de l'industrie des métaux non ferreux,
**caractérisé en ce que**
le four industriel comprend un revêtement selon l'une des revendications 28 à 30.
